(19) **Europäisches Patentamt / European Patent Office / Office européen des brevets**

(11) **EP 4 730 780 A1**

(12) **EUROPEAN PATENT APPLICATION**

(43) Date of publication:
**22.04.2026 Bulletin 2026/17**

(21) Application number: **24306722.0**

(22) Date of filing: **17.10.2024**

(51) International Patent Classification (IPC):
**H04N 19/117** (2014.01)  **H04N 19/172** (2014.01)
**H04N 19/70** (2014.01)  **H04N 19/85** (2014.01)

(52) Cooperative Patent Classification (CPC):
**H04N 19/117; H04N 19/172; H04N 19/70;
H04N 19/85**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
- **FRANCOIS, Edouard
  35890 BOURG DES COMPTES (FR)**
- **DOYEN, Didier
  35510 CESSON-SEVIGNE (FR)**
- **DEMARTY, Claire-Helene
  35520 MONTREUIL LE GAST (FR)**
- **DE LAGRANGE, Philippe
  35830 BETTON (FR)**

(74) Representative: **Interdigital
Immeuble ZEN 2
845 A, avenue des Champs Blancs
35510 Cesson-Sévigné (FR)**

(54) **METHOD AND APPARATUS FOR ENCODING/DECODING**

(57)    The present disclosure proposes an NNPF, signaled by an NNPFC SEI, that generates more than one version of a decoded picture at a given time stamp by one single inference of the NNPF. For instance, the NNPF may be referred to as a multi-hypothesis NNPF, as the neural-network post-filter generates at least two filtered pictures being packed in a large output picture, each of the filtered pictures corresponding to a particular hypothesis or control characteristic. For instance, encoding and decoding method and/or apparatus that comprises signaling one or more syntax structures for neural-network post-filter characteristics adapted to the present principles are disclosed.

FIG. 9

**Description**

**BACKGROUND**

The present application is related to a method and an apparatus for generating at least two filtered subpictures of a decoded picture by applying a multi-hypothesis neural-network post-filter to the decoded picture, the at least two filtered subpictures being packed in a large output picture.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction. Recent improvements to video compression technology includes a Neural-Network Post-Filter NNPF designed for various post-processing filtering purpose such as general visual quality improvement, chroma upsampling, resolution resampling, picture rate upsampling, temporal extrapolation.

**BRIEF SUMMARY**

In various implementations, methods and devices are disclosed that provide a syntax structure adapted to generate at least two filtered subpictures of a decoded picture by applying a multi-hypothesis neural-network post-filter to the decoded picture, the at least two filtered subpictures being packed in a large output picture.

According to a first aspect, a method of video encoding is disclosed that comprises encoding and decoding a picture of a video; obtaining multiple input hypothesis for a neural-network post-filter NNPF; deriving a neural-network post-filter NNPF model handling the multiple input hypothesis, the NNPF model generating at least two filtered subpictures packed in a large output picture; encoding a syntax structure NNPFC for the neural-network post-filter, the syntax structure NNPFC comprising an indication of the NNPF model generating at least two filtered subpictures packed in a large output picture; encoding a syntax structure for neural-network post-filter activation NNPFA associated with the NNPFC; and generating a bitstream comprising the encoded picture, the encoded NNPFC, the encoded NNPFA.

According to a second aspect, a method of video decoding is disclosed that comprises decoding a picture of a video; obtaining a syntax structure NNPFC for neural-network post-filter; decoding a neural-network post-filter NNPF model from the obtained NNPFC; obtaining a syntax structure for neural-network post-filter activation NNPFA associated with the obtained NNPFC; and generating at least two filtered subpictures by applying the activated NNPF model to the decoded picture, the activated NNPF model handling multiple input hypothesis, wherein at least two filtered subpictures are packed in a large output picture.

One or more embodiments also provide method and/or apparatus for signaling the different variants of the one or more syntax structures for neural-network post-filter according to any of the embodiments described herein.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 illustrates an example of usage of the NNPF process;

FIG. 5 illustrates another example of usage of the NNPF process for the use case of frame temporal extrapolation;

FIG. 6A and FIG. 6B illustrate examples of a packed frame including temporally extrapolated pictures according to various embodiments;

FIG. 7a, FIG. 7b, FIG. 7c, and FIG. 7d illustrate various examples of a packing of temporally extrapolated pictures into a 2D array of subpictures according to various embodiments;

FIG. 8. illustrate another example of a packing of NN post-filtered pictures into a 2D array of subpictures stored as an output picture according to an embodiment;

FIG. 9 provides a flow chart of a decoding and post-filtering process according to various embodiments of the present principles; and

FIG. 10 provides a flow chart of an encoding and signaling process according to an embodiment of the present principles.

FIG. 11 provides an example of usage of multiple temporally extrapolated pictures for reducing latency in which an embodiment of the present principles may apply.


## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

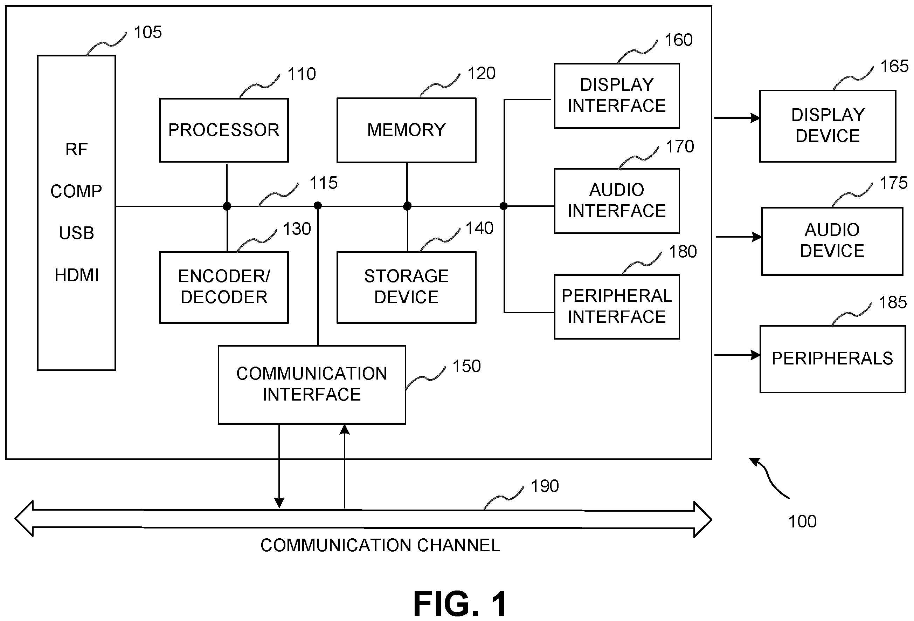

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

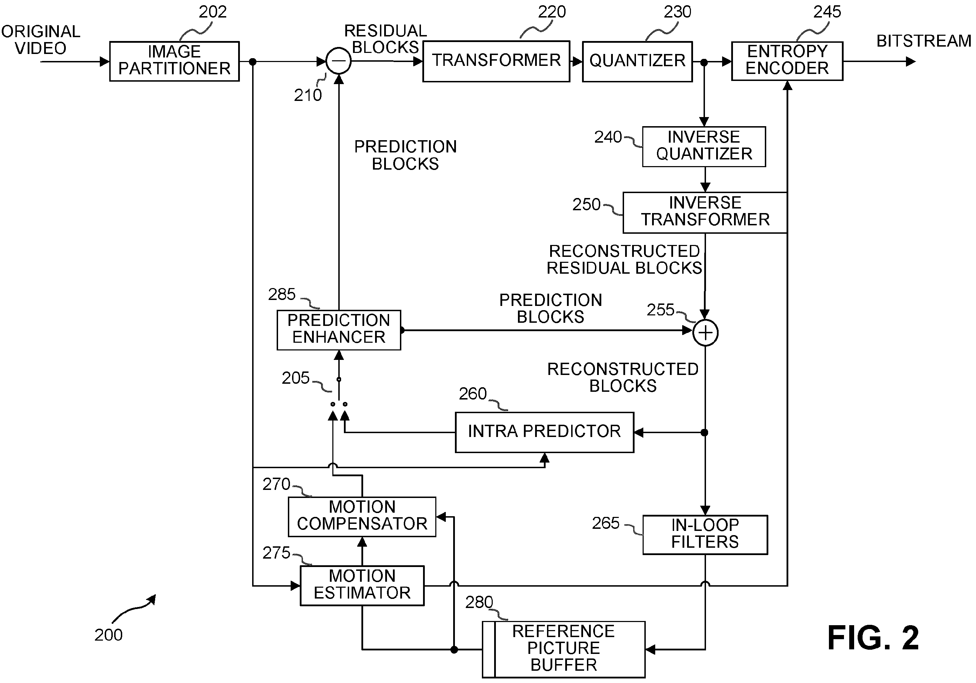

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

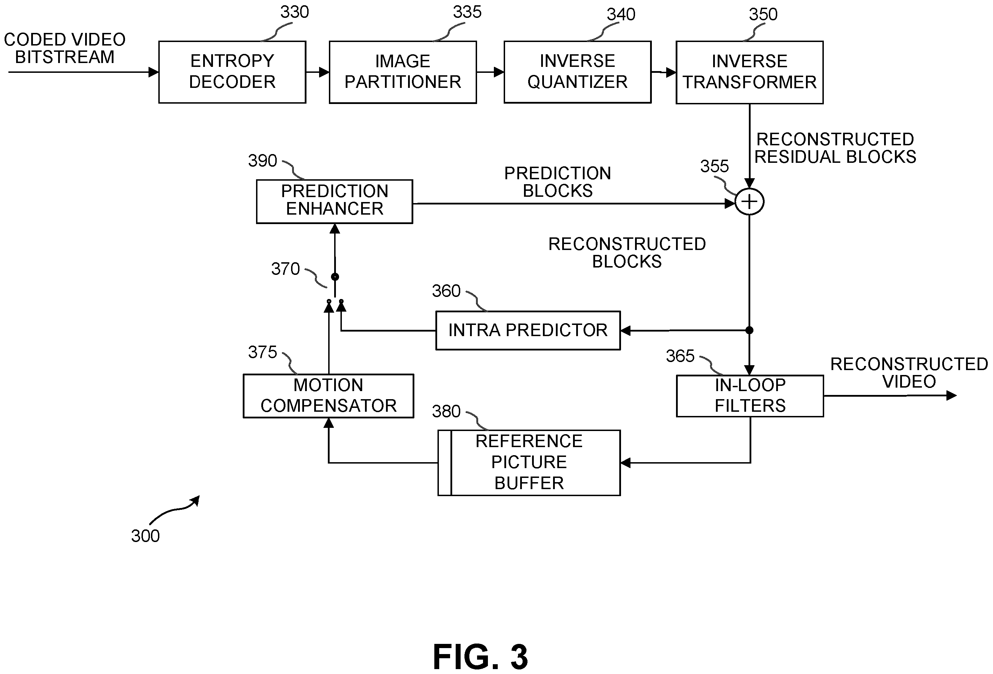

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by C).

Referring generally to FIG. 2 and the video encoder 200, video data (e.g., one or more video frames) is encoded generally as described below. Prior to encoding, video data may be preprocessed by a precoding processor (not shown).

The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signalled in the video bitstream. As described hereafter, the post-decoding processing can also include post-processing filtering.

Recent additions to video compression technology include various industry standards, versions of reference software and/or documentation such as Enhanced Compression Model (ECM) being developed by the JVET (Joint Video Exploration Team) group. The aim is to make further improvements to the existing VVC (Versatile Video Coding) standard and VSEI specification.

Recent improvements to video compression technology includes a Neural-Network Post-Filter NNPF designed for various post-processing filtering purpose such as general visual quality improvement, chroma upsampling, resolution resampling, picture rate upsampling. Yet, a recent addition to post-processing filtering comprises temporal extrapolation Neural Network NN, which is also known as a video prediction NN and, which generates one or more pictures in the future given one or more past pictures as input. For instance, typical use cases for temporal extrapolation include very low delay computer vision for domains like robotics and autonomous driving, where extrapolated future pictures facilitate anticipatory decision making; or an increase of the rendered picture rate in very low-latency applications, such as cloud gaming, relative to the decoded picture rate. Various implementations of the Neural-Network Post-Filter NNPF are realized by the means of a parameterized Neural Network (NN) model. For instance, information related to the parameterized NN model is signalled in the bitstream.

**Feature(s) associated with NNPFC SEI are provided herein.**

The neural-network post-filter (NNPF) characteristics SEI message is defined in an amendment of the VSEI specification. It allows conveying information related to a Neural Network (NN) model (as external or internal parameters, depending on syntax element **nnpfc_mode_idc**), plus information related to the purpose of the NN model (the "**nnpfc_purpose**" syntax element). This information is used to indicate the purposes that the signalled NNPF is intended to.

In a first prior art approach, an example of NNPFC SEI syntax has been proposed as illustrated in the following table.

| nn_post_filter_characteristics( payloadSize ) { | Descriptor |
|---|---|
|   **nnpfc_purpose** | u(16) |
|   **nnpfc_id** | ue(v) |
|   **nnpfc_base_flag** | u(1) |
|   **nnpfc_mode_idc** | ue(v) |
|   if( nnpfc_mode_idc = = 1 ) { | |
|     while( !byte_aligned( ) ) | |
|     **nnpfc_alignment_zero_bit_a** | u(1) |
|     **nnpfc_tag_uri** | st(v) |
|     **nnpfc_uri** | st(v) |
|   } | |
|   **nnpfc_property_present_flag** | u(1) |
|   if( nnpfc_property_present_flag ) { | |
|     /* input and output formatting */ | |
|     **nnpfc_num_input_pics_minus1** | ue(v) |
|     if( nnpfc_num_input_pics_minus1 > 0 ) { | |
|       for( i = 0; i <= nnpfc_num_input_pics_minus1; i++ ) | |
|       **nnpfc_input_pic_filtering_flag**[ i ] | u(1) |
|       **nnpfc_absent_input_pic_zero_flag** | u(1) |
|     } | |
|     if( ChromaUpsamplingFlag ) | |
|     **nnpfc_out_sub_c_flag** | u(1) |
|     if( ColourizationFlag ) | |
|     **nnpfc_out_colour_format_idc** | u(2) |
|     if( ResolutionResamplingFlag ) { | |
|     **nnpfc_pic_width_num_minus 1** | ue(v) |

(continued)

| | |
|---|---|
| **nnpfc_pic_width_denom_minus1** | ue(v) |
| **nnpfc_pic_height_num_minus1** | ue(v) |
| **nnpfc_pic_height_denom_minus1** | ue(v) |
| } | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) | |
| **nnpfc_extrapolated_pics_minus1** | ue(v) |
| if( SpatialExtrapolationFlag ) { | |
| **nnpfc_spatial_extrapolation_left_offset** | se(v) |
| **nnpfc_spatial_extrapolation_right_offset** | se(v) |
| **nnpfc_spatial_extrapolation_top_offset** | se(v) |
| **nnpfc_spatial_extrapolation_bottom_offset** | se(v) |
| **nnpfc_spatial_extrapolation_prompt_present_flag** | u(1) |
| if (nnpfc_spatial_extrapolation_prompt_present_flag) { | |
| while( !byte_aligned( ) ) | |
| **nnpfc_alignment_zero_bit_c** | u(1) |
| **nnpfc_prompt** | st(v) |
| } | |
| } | |
| **nnpfc_component_last_flag** | u(1) |
| **nnpfc_inp_format_idc** | ue(v) |
| **nnpfc_auxiliary_inp_idc** | ue(v) |
| **nnpfc_inp_order_idc** | ue(v) |
| if( nnpfc_inp_format_idc == 1 ) { | |
| if( nnpfc_inp_order_idc != 1 ) | |
| **nnpfc_inp_tensor_luma_bitdepth_minus8** | ue(v) |
| if( nnpfc_inp_order_idc > 0 ) | |
| **nnpfc_inp_tensor_chroma_bitdepth_minus8** | ue(v) |
| } | |
| **nnpfc_out_format_idc** | ue(v) |
| **nnpfc_out_order_idc** | ue(v) |
| if( nnpfc_out_format_idc == 1 ) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |

(continued)

| | |
|---|---|
| if( nnpfc_separate_colour_description_present_flag ) { | |
| **nnpfc_colour_primaries** | u(8) |
| **nnpfc_transfer_characteristics** | u(8) |
| if( nnpfc_out_format_idc = = 1 ) { | |
| **nnpfc_matrix_coeffs** | u(8) |
| **nnpfc_full_range_flag** | u(1) |
| } | |
| } | |
| if( nnpfc_out_order_idc > 0 ) | |
| **nnpfc_chroma_loc_info_present_flag** | u(1) |
| if( nnpfc_chroma_loc_info_present_flag ) | |
| **nnpfc_chroma_sample_loc_type_frame** | ue(v) |
| if( !SpatialExtrapolationFlag ) { | |
| **nnpfc_overlap** | ue(v) |
| **nnpfc_constant_patch size flag** | u(1) |
| if( nnpfc_constant_patch_size_flag ) { | |
| **nnpfc_patch_width_minus1** | ue(v) |
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |
| } | |
| **nnpfc_padding_type** | ue(v) |
| if( nnpfc_padding_type = = 4 ) { | |
| if( nnpfc_inp_order_idc != 1 ) | |
| **nnpfc_luma_padding_val** | ue(v) |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present flag** | u(1) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |

(continued)

| | |
|---|---|
| } | |
| **nnpfc_num_metadata_extension_bits** | ue(v) |
| if( nnpfc_num_metadata_extension_bits > 0 ) { | |
| if( nnpfc_purpose = = 0 ) { | |
| **nnpfc_application_purpose_tag_uri_present_flag** | u(1) |
| while( !byte_aligned( ) ) | |
| **nnpfc_metadata_alignment_zero_bit** | u(1) |
| if( nnpfc_application_purpose_tag_uri_present_flag ) | |
| **nnpfc_application_purpose_tag_uri** | st(v) |
| } | |
| if( SpatialExtrapolationFlag ) | |
| **nnpfc_scan_type_idc** | u(2) |
| **nnpfc_for_human_viewing_idc** | u(2) |
| **nnpfc_for_machine_analysis_idc** | u(2) |
| **nnpfc_reserved_metadata_extension** | u(v) |
| } | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

The semantics related to **nnpfc_purpose** syntax may be specified as follows: **nnpfc_purpose** indicates the purpose of the NNPF as specified in Table 20, where ( nnpfc_purpose & bitMask ) not equal to 0 indicates that the NNPF has the purpose associated with the bitMask value in Table 20. When nnpfc_purpose is greater than 0 and ( nnpfc_purpose & bitMask ) is equal to 0, the purpose associated with the bitMask value is not applicable to the NNPF. When nnpfc_pupose is equal to 0, the NNPF may be used as determined by the application and as specified by the nnpfc_application_purpose_tag_uri.

All NNPFC SEI messages with a particular value of nnpfc_id within a CLVS shall have the same value of nnpfc_purpose.

The value of nnpfc_purpose shall be in the range of 0 to 255, inclusive, in bitstreams conforming to this version of this Specification. Values of 256 to 65 535, inclusive, for nnpfc_purpose are reserved for future use by ITU-T | ISO/IEC and shall not be present in bitstreams conforming to this version of this Specification. Decoders conforming to this version of this Specification shall ignore NNPFC SEI messages with nnpfc_purpose in the range of 256 to 65 535, inclusive.

**Table 20** - **Definition of nnpfc_purpose**

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |

(continued)

| bitMask | Interpretation |
|---|---|
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures), possibly also with removal (i.e. remove partial content from the input pictures) |

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_purpose indicates the purpose of the NNPF to include chroma upsampling, resolution resampling, picture rate upsampling, bit depth upsampling, colourization, and temporal extrapolation, respectively, are derived as follows:

$$\text{ChromaUpsamplingFlag} = ( ( \text{nnpfc\_purpose} \ \& \ 0x02 ) > 0 ) ? 1 : 0$$

$$\text{ResolutionResamplingFlag} = ( ( \text{nnpfc\_purpose} \ \& \ 0x04 ) > 0 ) ? 1 : 0$$

$$\text{PictureRateUpsamplingFlag} = ( ( \text{nnpfc\_purpose} \ \& \ 0x08 ) > 0 ) ? 1 : 0 \qquad (75)$$

$$\text{BitDepthUpsamplingFlag} = ( ( \text{nnpfc\_purpose} \ \& \ 0x10 ) > 0 ) ? 1 : 0$$

$$\text{ColourizationFlag} = ( ( \text{nnpfc\_purpose} \ \& \ 0x20 ) > 0 ) ? 1 : 0$$

$$\text{TemporalExtrapolationFlag} = ( ( \text{nnpfc\_purpose} \ \& \ 0x40 ) > 0 ) ? 1 : 0$$

$$\text{SpatialExtrapolationFlag} = ( ( \text{nnpfc\_purpose} \ \& \ 0x80 ) > 0 ) ? 1 : 0$$

NOTE 2- When a reserved value of nnpfc_purpose is taken into use in the future by ITU-T | ISO/IEC, the syntax of this SEI message could be extended with syntax elements whose presence is conditioned by nnpfc_purpose being equal to that value or any one of a set of values including that value.

In the NNPF characteristics SEI of the first prior art approach, the concept of sending a base NNPF in an NNPFC SEI and of updating it in another NNPFC SEI is specified. An NNPF with a given Id specified in **nnpfc_id**, can be signalled as a base model, that can be used as reference and that can also be updated by sending/receiving a new NNPFC SEI with same nnpfc_id. The syntax element **nnpfc_base_flag** is defined for indicating whether the NN model is a base model or an update relative to the base NNPF. Basic constraints are specified on the update mechanism:

- The first NNPF, signalled in an NNPFC SEI, with a given Id appearing in the bitstream should be a base NNPF.
- All subsequent NNPFC SEIs having the same Id and being base NNPFC should have the same content as the 1st base NNPFC with this Id.
- Updates are not cumulative but rather each update is applied on the base NNPF.

The semantics related to **nnpfc_base_flag** is provided below:

| nn_post_filter_characteristics( payloadSize ) { | Descriptor |
|---|---|
| **nnpfc_purpose** | u(16) |
| **nnpfc_id** | ue(v) |
| **nnpfc_base_flag** | u(1) |

(continued)

| ... | |
|---|---|
| **nnpfc_base_flag** equal to 1 specifies that the SEI message specifies the base NNPF. nnpfc_base_flag equal to 0 specifies that the SEI message specifies an update relative to the base NNPF. | |

The following constraints apply to the value of nnpfc_base_flag:

- When an NNPFC SEI message is the first NNPFC SEI message, in decoding order, that has a particular nnpfc_id value within the current CLVS, the value of nnpfc_base_flag shall be equal to 1.
- All NNPFC SEI messages in a CLVS that have a particular nnpfc_id value and nnpfc_base_flag equal to 1 shall have identical SEI payload content.

When nnpfc_base_flag is equal to 0, the following applies:

- This SEI message defines an update relative to the preceding base NNPF in decoding order with the same nnpfc_id value. Updates are not cumulative but rather each update is applied on the base NNPF, which is the NNPF specified by the first NNPFC SEI message, in decoding order, that has a particular nnpfc_id value within the current CLVS. The NNPF defined by this SEI message is obtained by applying the update defined by this SEI message relative to the base NNPF with the same nnpfc_id value.
- This SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent NNPFC SEI message, in decoding order, having nnpfc_base_flag equal to 0 and that particular nnpfc_id value within the current CLVS, whichever is earlier.

In addition to the NNPFC SEI message, a Neural-network post-filter activation SEI message (NNPFA) is further specified in the first prior art approach. NNPFA SEI is used to activate or de-activate the possible use of a neural-network post-processing filter (NNPF), identified by syntax elements **nnpfa_target_id** and **nnpfa_target_base_flag**, for post-processing filtering of a set of pictures.

If nnpfa_target_base_flag is equal to 1, the target NNPF is the base NNPF with nnpfc_id equal to nnpfa_target_id. Otherwise, the target NNPF is the NNPF specified by the last NNPFC SEI message with nnpfc_id equal to nnpfa_target_id, that is a base NNPF.

It is noted that there can be several NNPFA SEI messages present for the same picture, for example, when the NNPFs are meant for different purposes or for filtering of different colour components.

Syntax and excerpts of semantics of NNPFA are provided below.

| nn_post_filter_activation( payloadSize ) { | **Descriptor** |
|---|---|
|     **nnpfa_target_id** | ue(v) |
|     **nnpfa_cancel_flag** | u(1) |
|     if( !nnpfa_cancel_flag ) { | |
|         **nnpfa_persistence flag** | u(1) |
|         **nnpfa_target_base_flag** | u(1) |
|         **nnpfa_no_prev_clvs_flag** | u(1) |
|         if( nnpfa_persistence_flag ) | |
|             **nnpfa_no_foll_clvs_flag** | u(1) |
|         **nnpfa_num_output_entries** | ue(v) |
|         for( i = 0; i < nnpfa_num_output_entries; i++ ) | |
|             **nnpfa_output_flag**[ i ] | u(1) |
|     } | |

(continued)

| } | |
|---|---|
| **nnpfa_target_base_flag** equal to 1 specifies that the target NNPF is the base NNPF with nnpfc_id equal to nnpfa_target_id. nnpfa_target_base_flag equal to 0 specifies that the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF. | |

NOTE 3 - An NNPFA message can activate a base NNPF with a particular nnpfc_id value when an update of the base NNPF is active, which switches the target NNPF from the updated NNPF to the base NNPF.

When nnpfa_target_base_flag in an NNPFA SEI message is equal to 0, there shall be at least one NNPFC SEI message with nnpfc_id equal to nnpfa_target_id and nnpfc_base_flag equal to 0 that precedes the NNPFA SEI message in decoding order.

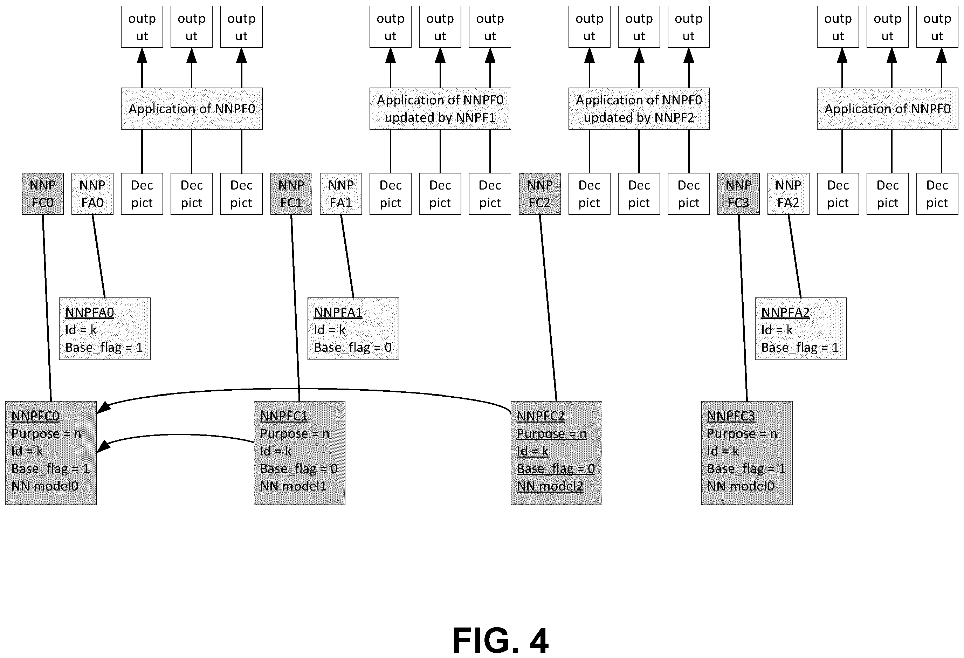

FIG. 4 illustrates an example of usage of the NNPF process. This example shows insertion in the stream of NNPFC SEIs where some are base, some are updates. It also shows insertion of NNPFA SEIs, for activating the NNPF. The NNPF version applies to decoded pictures depending on the location in the stream of the inserted NNPFC SEIs and NNPFA SEIs. The first received NNPFA (NNPFA0) activates the base NNPF (NNPFO corresponding to NNPFC0) for the subsequent decoded pictures. Then an update of the base NNPF (corresponding to NNPFC1) is received, and this update is activated by the second received NNPFA SEI (NNPFA1) for the subsequent decoded pictures. Another update of the base NNPF (corresponding to NNPFC2) is received, the update applying for the subsequent decoded pictures. Another base NNPFC is received (corresponding to NNPFC3), activated by a new NNPFA (NNPFA2) that re-activates the base NNPF (NNPFO) for the subsequent decoded pictures. In this example the output of the NNPF process are post-filtered versions of the decoded pictures.

In this figure and following figures, for notation simplification, nnpfc_purpose is replaced by "Purpose", nnpfc_id is replaced by "Id", nnpfc_base_flag is replaced by "Base_flag".

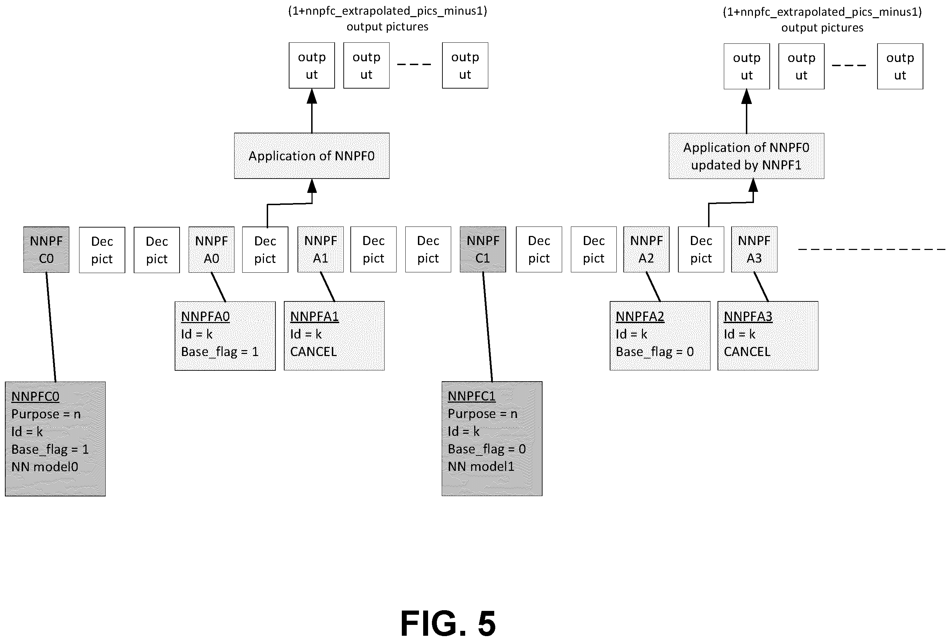

FIG. 5 illustrates another example of usage of the NNPF process for the use case of frame temporal extrapolation. In this case the output from NNPFs is made of several successive output pictures following in time the last decoded picture. Use cases for this Video prediction feature are robotics, autonomous driving, action anticipation. For instance, for self-driving cars, the trajectory prediction in traffic of pedestrians is extremely useful to anticipate future events. Base NNPFC0 is first received, and activated thanks to NNPFA0, which activates the application of NNPFO to generate (1+ nnpfc_extrapolated_pics_minus1) temporally extrapolated output pictures following the latest decoded picture. Input of the NNPFO is the last decoded picture, but may also include more than one previously decoded pictures. The application of NNPFO is then cancelled for the following decoded pictures, by NNPFA1 (CANCEL flag equal to 1). An update of the base NNPFO, NNPF1, is then received in NNPFC1, and activated by NNPFA2 to generate temporally extrapolated output pictures following the latest decoded picture. The application of NNPF1 is then cancelled for the following decoded pictures, by NNPFA2 (CANCEL flag equal to 1).

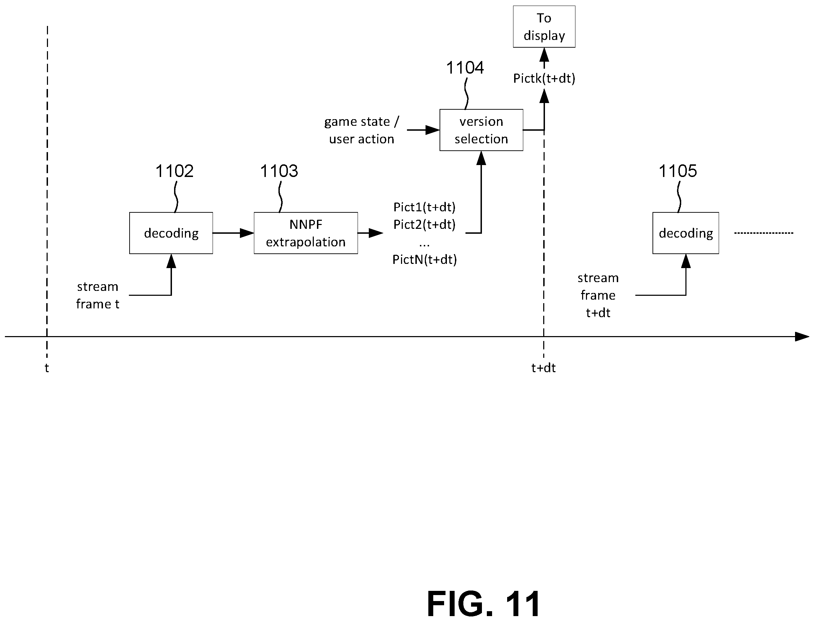

In the current design on the NNPF SEI messages, whatever the purpose of the NNPF, as defined by the syntax element **nnpfc_purpose**, the post-filtering using the NN model defined in the NNPFC can only generate one post-filtered picture instance per time instant, or time stamp or picture number or picture order count. The NNPF can generate several pictures from the decoded picture at different time stamps, or picture numbers or picture order counts (POCs), for instance in case of interpolation from 2 surrounding non-successive decoded pictures, or in case of extrapolation from previous decoded pictures. But for a given time stamp, or picture number, or POC, one single processed picture can be generated from the application of the NNPF. For example, when the purpose is frame interpolation, only one instance per output interpolated frame is generated. It is not allowed to generate multiple instances or versions of a same output frame, i.e., corresponding to the same time stamp. A method that would allow generating multiple versions of a same output frame, wherein each version may correspond to a different hypothesis or characteristic is therefore desirable. Such method may be used to avoid or reduce latency and would be particularly advantageous for the use case of frame temporal extrapolation as described above in the context of autonomous driving or below in the context of cloud gaming with respect to FIG. 11. Thus, to avoid or reduce latency, it would be preferable to generate multiple extrapolated picture versions wherein each extrapolated picture version corresponds to a different actions, behaviors or states of the end user, for example, different potential movement of the head of the end user. Then, at the end-user side the proper version may be selected based on user behavior, e.g. the real head movement of the user. Nevertheless, the present principles would also be advantageous and easily implemented to address other purposes such as frame interpolation, frame upsampling, frame filtering, colourization, quality improvement.

Accordingly, the present disclosure proposes an NNPF, signaled by an NNPFC SEI message, that generates more than one version of a filtered picture from the NNPF at a given time stamp by one single inference of the NNPF. For instance, the NNPF may be named a multi-hypothesis NNPF, as the neural-network post-filter generates at least two filtered pictures being packed in a large output picture, each of the filtered pictures corresponding to a particular hypothesis or control characteristic. In the following, the filtered pictures may be named filtered subpictures (as they are packed in an output picture of larger size) or the multiple versions (e.g instances) of a temporally extrapolated picture in the case where the NNPFC purpose is temporal extrapolation. The skilled in the art will appreciate that in a variant, the large output picture may be named a super picture and the naming filtered pictures kept for different versions at the output of the NNPF.

In a first embodiment, a multi-hypothesis NNPF is proposed to produce multiple subpictures packed into a large output picture.

In a second embodiment, it is proposed to optionally add syntax elements in the NNPFC SEI message (or in an external structure such as a frame packing information SEI message) to describe the way the packing is performed in the large output picture.

In a third embodiment, it is proposed to optionally add informative syntax elements for each of the multiple subpictures, indicative of their meaning; these informative syntax elements may be in the shape of text prompts.

In a fourth embodiment, it is proposed to identify, from an index of output picture to retrieve, the expected output subpicture within the large output picture. According to a variant, it is proposed to select the subpicture to be used using external means. For example, a correspondence between a user input captured by external means and the informative syntax elements descriptive of each filtered subpicture may be determined for the selection of the subpicture within the large output picture.

In a fifth embodiment, a process at decoder implementing any other previous embodiments is disclosed.

In a sixth embodiment, a process at encoder implementing any other previous embodiments is disclosed.

In the following, the present principles are illustrated using the NNPFC purpose for temporal extrapolation. The multiple output instances are multiple different temporal extrapolated pictures at each time instant. The concept may be extended to other purposes such as frame interpolation, frame upsampling, frame filtering, colourization, quality improvement according to non-limiting examples. Various embodiments of the syntax structure are described in the following that may be used in combination or independently.

**Feature(s) associated with the first embodiment are provided herein**.

The first embodiment comprises generating multiple versions of the temporally extrapolated picture in a large, packed frame. For instance, when the purpose of the NNPFC SEI message is temporal extrapolation, the output of the NNPF inference may be a single large output picture that embeds multiple versions of a temporally extrapolated picture, also named subpictures in the following of the present disclosure. According to alternative wording used by the skilled in the art, the output of the NNPF inference may be referred to as an output tensor. The tensor may be multidimensional. For instance, the output tensor is two-dimensional 2D for each component (luma, chroma) of a video image.

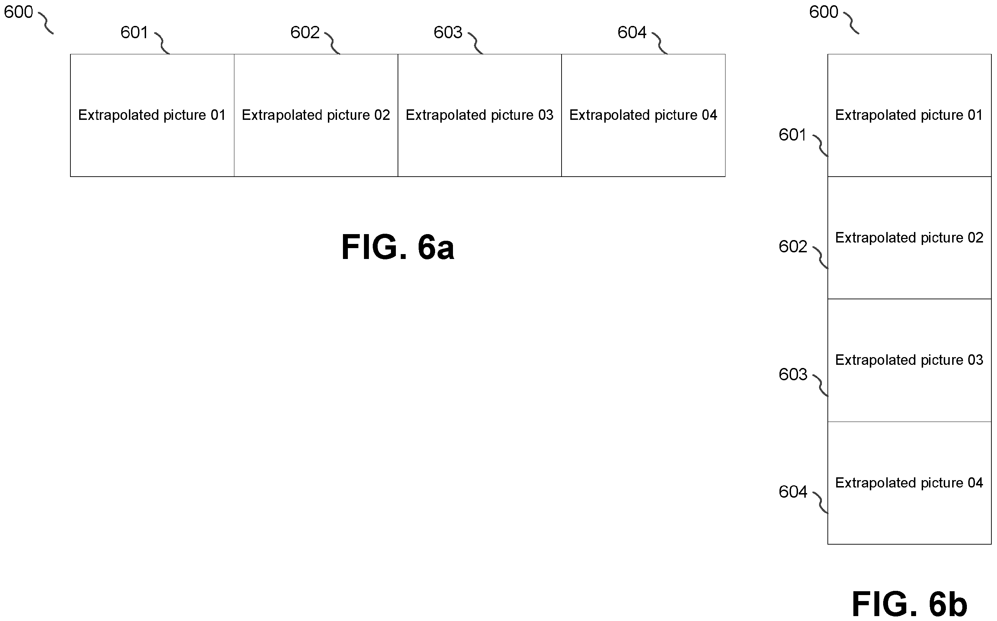

FIG. 6A and FIG. 6B illustrate examples of a packed frame including temporally extrapolated pictures. The single large output picture 600 is obviously larger than each of the multiple versions of a temporally extrapolated picture (e.g subpictures) 601, 602, 603, 604. The different versions of the temporally extrapolated picture are packed into one large picture 600, for example horizontally as shown on FIG. 6A, or vertically as shown on FIG. 6B. Each extrapolated picture is a subpicture that can be identified by a subpicture index 01, 02, 03, 04. Advantageously, a pre-defined arrangement of subpictures, for instance horizontally or vertically, avoid the signaling of further descriptive syntax elements of the arrangement of subpictures in the output picture.

**Feature(s) associated with the second embodiment are provided herein.**

The second embodiment comprises signaling syntax elements descriptive of the frame packing. For instance, when multiple versions of the temporally extrapolated picture are packed in a large frame, a NNPFC SEI message may comprise information related to the packing of the multiple versions of a temporally extrapolated picture (multiple subpictures) into the large output picture. An example of syntax is described in the table below (new syntax is underlined, italic).

| nn_post_filter_characteristics( payloadSize ) { | Descriptor |
|---|---|
| nnpfc_purpose | u(16) |
| nnpfc_id | ue(v) |
| ... | u(1) |
| nnpfc_property_present flag | u(1) |
| if( nnpfc_property_present_flag ) { | |

(continued)

| | |
|---|---|
| ... | |
| if( PictureRateUpsamplingFlag ) | |
|    for( i = 0; i < nnpfc_num_input_pics_minus1; i++ ) | |
|      **nnpfc_interpolated_pics**[ i ] | ue(v) |
|    if( TemporalExtrapolationFlag ) { | |
|      **nnpfc_extrapolated_pics_minus1** | ue(v) |
|      *nnpfc_extrapolated_subpics_minus1* | *u(4)* |
|      *nnpfc_extrapolated_subpics_per_row_minus1* | *u(4)* |
|    *}* | |
|    ... | |
|  } | |
| /* ISO/IEC 15938-17 bitstream */ | |
| if( nnpfc_mode_idc = = 0 ) { | |
|    while( !byte_aligned( ) ) | |
|      **nnpfc_alignment_zero_bit_b** | u(1) |
|    for( i = 0; more_data_in_payload( ); i++ ) | |
|      **nnpfc_payload_byte**[ i ] | b(8) |
|  } | |
| } | |

In this example, two syntax elements are added for which the semantics may be:

**nnpfc_extrapolated_subpics_minus1** plus one indicates the number of alternative temporal extrapolation versions generated in the output tensor outputTensor.

**nnpfc_extrapolated_subpics_per_row_minus1** plus one indicates the number of alternative temporal extrapolation versions per row in the output tensor outputTensor. When not present, nnpfc_extrapolated_subpics_per_row_minus1 is inferred to be equal to 0.

The variables subpicPerRow and subpicPerCol, respectively representing the number of subpictures per row and per column present in the output tensor outputTensor of the NNPF, are derived as follows:

$$\text{subpicPerRow} = (\text{nnpfc\_extrapolated\_subpics\_per\_row\_minus1} + 1)$$

subpicPerCol = (nnpfc_extrapolated_subpics_minus1 + 1 + subpicPerRow - 1)/ subpicPerRow.

Another example of syntax is described in the table below (new syntax is underlined, italic) where the additional *nnpfc extrapolated subpics per column* minus 1 is signaled for ease of computation.

| nn_post_filter_characteristics( payloadSize ) { | **Descriptor** |
|---|---|
|    **nnpfc_purpose** | u(16) |
|    **nnpfc_id** | ue(v) |
|    ... | u(1) |
|    **nnpfc_property_present flag** | u(1) |
|    if( nnpfc_property_present_flag ) { | |

(continued)

| | |
|---|---|
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) { | |
| **nnpfc_extrapolated_pics_minus1** | ue(v) |
| ***nnpfc_extrapolated_subpics_minus1*** | *u(4)* |
| ***nnpfc_extrapolated_subpics_per_row_minus1*** | *u(4)* |
| ***nnpfc_extrapolated_subpics_per_column_minus1*** | *u(4)* |
| *}* | |
| ... | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

In this example, the semantics for the three syntax elements may be: **nnpfc_extrapolated_subpics_minus1** plus one indicates the number of alternative temporal extrapolation versions generated in the output tensor outputTensor. **nnpfc_extrapolated_subpics_per_row_minus1** plus one indicates the number of alternative temporal extrapolation versions per row in the output tensor outputTensor. When not present, nnpfc_extrapolated_subpics_per_row_minus1 is inferred to be equal to 0. **nnpfc_extrapolated_subpics_per_column_minus1** plus one indicates the number of alternative temporal extrapolation versions per column in the output tensor outputTensor. When not present, nnpfc_extrapolated_subpics_per_row_minus1 is inferred to be equal to 0.

The variables subpicPerRow and subpicPerCol, respectively representing the number of subpictures per row and per column present in the output tensor outputTensor of the NNPF, are derived as follows:

$$\text{subpicPerRow} = (\text{nnpfc\_extrapolated\_subpics\_per\_row\_minus1} + 1)$$

$$\text{subpicPerCol} = (\text{nnpfc\_extrapolated\_subpics\_per\_column\_minus1} + 1)$$

The following constraint is imposed:

(nnpfc_extrapolated_subpics_minus1 + 1) <=(npfc_extrapolated_subpics_per_row_minus1 + 1) * (nnpfc_ extrapolated_subpics_per_colum_minus1 + 1)

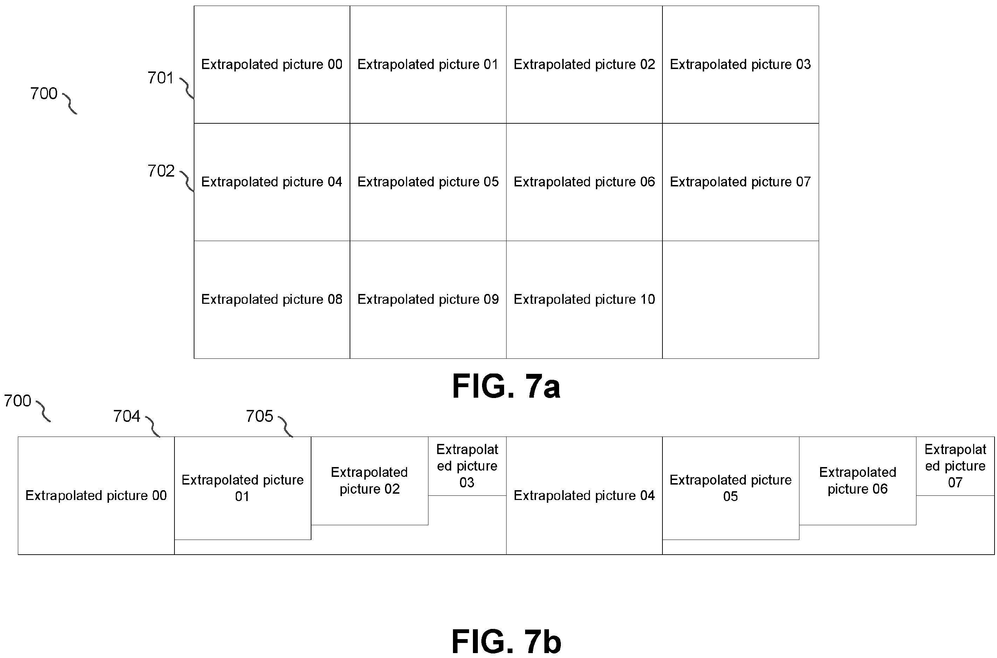

FIG. 7a illustrates an example of a packing of temporally extrapolated pictures into a 2D array of subpictures. Each subpicture 701, 702 corresponds to a particular version of the temporally extrapolated picture 701, 702. In this example, the number of subpictures per row subpicPerRow is 4 and the number of subpictures per column subpicPerCol is 3 for a total number of 11 subpictures. Accordingly,:

$$\text{nnpfc\_extrapolated\_subpics\_minus1} = 10,$$

$$\text{subpicPerRow} = \text{npfc\_extrapolated\_subpics\_per\_row\_minus}1 + 1 = 4,$$

subpicPerCol = (nnpfc_extrapolated_subpics_minus1 + 1 + subpicPerRow - 1)/ subpicPerRow = 14 / 4 = 3,

The 11 extrapolated pictures are packed in raster scan order into a large output picture 700.

In the large output 2D tensor, each one of the extrapolated picture versions may be considered as a subpicture of the large output 2D picture, identified by a subpicture index. In example of FIG. 7a, the index varies from 00 to 10.

According to an additional feature, a syntax element representative of subpicture size may be inserted in the NNPFC syntax. Advantageously, this variant allows variable subpicture sizes. For instance, the large output tensor may contain extrapolated versions (subpictures) of different sizes, e.g., one size per extrapolated version (subpicture). In this case the syntax might be modified as follows:

| nn_post_filter_characteristics( payloadSize ) { | Descriptor |
|---|---|
| **nnpfc_purpose** | u(16) |
| **nnpfc_id** | ue(v) |
| ... | u(1) |
| **nnpfc_property_present flag** | u(1) |
|   if( nnpfc_property_present_flag ) { | |
|     ... | |
|     if( PictureRateUpsamplingFlag ) | |
|       for( i = 0; i < nnpfc_num_input_pics_minus1; i++ ) | |
|         **nnpfc_interpolated_pics**[ i ] | ue(v) |
|     if( TemporalExtrapolationFlag ) *{* | |
|       **nnpfc_extrapolated_pics_minus1** | ue(v) |
|       *__nnpfc_extrapolated_subpics_minus1__* | *u(4)* |
|       *__nnpfc_extrapolated_subpics_per_row_minus1__* | *u(4)* |
|       *__nnpfc_variable_subpicture_size_flag__* | *u(4)* |
|       *__if(nnpfc_variable_subpicture_size_flag)__* | |
|         *__for( i = 0; i <= nnpfc extrapolated subpics minus1; i++ ) {__* | |
|           *__nnpfc_width_of_subpicture__*[ i ] | *u(4)* |
|           *__nnpfc_height_of_subpicture__*[ i ] | *u(4)* |
|         *__}__* | |
|     *__}__* | |
|     ... | |
|   } | |
|   /* ISO/IEC 15938-17 bitstream */ | |
|   if( nnpfc_mode_idc = = 0 ) { | |
|     while( !byte_aligned( ) ) | |
|       **nnpfc_alignment_zero_bit_b** | u(1) |
|     for( i = 0; more_data_in_payload( ); i++ ) | |
|       **nnpfc_payload_byte**[ i ] | b(8) |
|   } | |
| } | |

In a variant, a flag **nnpfc_variable_subpicture_size_flag** may be signaled to indicate whether variable subpicture sizes are allowed or not.

When the flag **nnpfc_variable_subpicture_size_flag** is true, parameters related to the size of the subpictures may be signaled.

In another variant, subpicture sizes may be ratios related to a default subpicture size, for example, to the decoded picture size (CroppedWidth and CroppedHeight). Subpicture sizes ratios nnpfc_subpicture_num_minus1[ i ] and nnpfc_subpicture_denom_minus1[ i ] may be signaled. For instance, nnpfc_subpicture_num_minus1[ i ] and nnpfc_subpicture_denom_minus1[ i ] plus one may specify the numerator and denominator, respectively, for the resampling ratio of the width of the NNPF-generated subpicture of index i relative to CroppedWidth (that is, the size of the decoded picture). Both nnpfc_subpicture_num_minus1[ i ] and nnpfc_subpicture_denom_minus1[ i ] shall be in the range of 0 to 65 535, inclusive.

| nn_post_filter_characteristics( payloadSize ) { | Descript or |
|---|---|
|   **nnpfc_purpose** | u(16) |
|   **nnpfc_id** | ue(v) |
|   ... | u(1) |
|   **nnpfc_property_present_flag** | u(1) |
|   if( nnpfc_property_present_flag ) { | |
|     ... | |
|     if( PictureRateUpsamplingFlag ) | |
|       for( i = 0; i < nnpfc_num_input_pics_minus1; i++ ) | |
|         **nnpfc_interpolated_pics**[ i ] | ue(v) |
|     if( TemporalExtrapolationFlag ) *{* | |
|       **nnpfc_extrapolated_pics_minus1** | ue(v) |
|       *__nnpfc_extrapolated_subpics_minus1__* | *__u(4)__* |
|       *__nnpfc_extrapolated_subpics_per_row_minus1__* | *__u(4)__* |
|       *__nnpfc_variable_subpicture_size_flag__* | *__u(4)__* |
|       *__if(nnpfc_variable_subpicture_size_flag )__* | |
|       *__for (i=0: i<= nnpfc_extrapolated_subpics_minus1; i++) {__* | |
|         *__nnpfc_subpicture_num_minus1__*[ i ] | *__ue(v)__* |
|         *__nnpfc_subpicture_denom_minus1__*[ i ] | *__ue(v)__* |
|       *__}__* | |
|     *__}__* | |
|     ... | |
|   } | |
|   /* ISO/IEC 15938-17 bitstream */ | |
|   if( nnpfc_mode_idc = = 0 ) { | |
|     while( !byte_aligned( ) ) | |
|       **nnpfc_alignment_zero_bit_b** | u(1) |
|     for( i = 0; more_data_in_payload( ); i++ ) | |
|       **nnpfc_payload_byte**[ i ] | b(8) |
|   } | |
| } | |

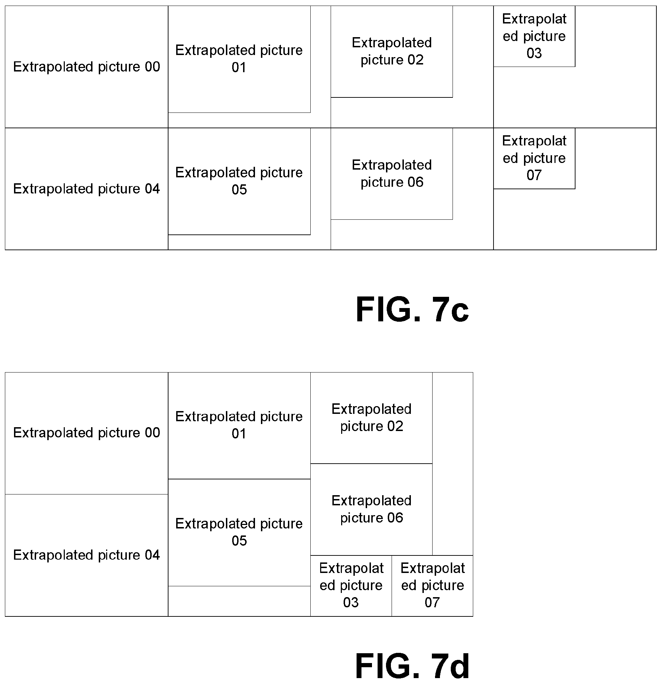

FIG. 7c and FIG. 7d illustrate 2 examples of a packing of temporally extrapolated pictures with variable subpicture sizes. In the example of FIG. 7c, a regular packing is adopted where, whatever the subpicture size, the subpictures are packed based on the largest subpicture size pattern. A more complex packing may also be used, not based on a regular subpicture grid, as illustrated in FIG. 7d. The packing structure may be described in the syntax or implicitly deduced based on the subpicture sizes, in order to obtain the smallest large picture as possible.

According to yet an additional feature, the packing of subpictures may be adapted to the output picture size. In the VSEI specification, the width and height (denoted nnpfcOutputPicWidth and nnpfcOutputPicHeight) of the output picture are defined as follows:

The variable nnpfcOutputPicWidth, representing the width of the luma sample arrays of the NNPF-generated pictures, is derived as follows:

$$\text{nnpfcOutputPicWidth} = \text{Ceil( CroppedWidth *} \qquad (77)$$

$$(\text{nnpfc\_pic\_width\_num\_minus1} + 1) \div (\text{nnpfc\_pic\_width\_denom\_minus1} + 1))$$

The variable nnpfcOutputPicHeight, representing the height of the luma sample arrays of the NNPF-generated pictures, is derived as follows:

$$\text{nnpfcOutputPicHeight} = \text{Ceil( CroppedHeight *} \qquad (78)$$

$$(\text{nnpfc\_pic\_height\_num\_minus1} + 1) \div (\text{nnpfc\_pic\_height\_denom\_minus1} + 1))$$

where CroppedWidth and CroppedHeight are the width and height in units of luma samples of the input picture of the NNPF, respectively.

Then, nnpfc_pic_width_num_minus1 and nnpfc_pic_width_denom_minus 1 are defined as follows:

**nnpfc_pic_width_num_minus1** plus one and **nnpfc_pic_width_denom_minus1** plus one specify the numerator and denominator, respectively, for the resampling ratio of the width of the NNPF-generated pictures relative to CroppedWidth. Both nnpfc_pic_width_num_minus1 and nnpfc_pic_width_denom_minus1 shall be in the range of 0 to 65 535, inclusive.

The value of ( nnpfc_pic_width_num_minus1 + 1 ) ÷ ( nnpfc_pic_width_denom_minus1 + 1 ) shall be in the range of 1 ÷ 16 to 16, inclusive. When nnpfc_pic_width_num_minus1 and nnpfc_pic_width_denom_minus1 are not present, the values of nnpfc_pic_width_num_minus1 and nnpfc_pic_width_denom_minus1 are both inferred to be equal to 0.

Similarly, **nnpfc_pic_height_num_minus1** and **nnpfc_pic_height_denom_minus1** are defined as follows:

**nnpfc_pic_height_num_minus1** plus one and **nnpfc_pic_height_denom_minus1** plus one specify the numerator and denominator, respectively, for the resampling ratio of the height of the NNPF-generated pictures relative to CroppedHeight. Both nnpfc_pic_height_num_minus1 and nnpfc_pic_height_denom_minus1 shall be in the range of 0 to 65 535, inclusive.

The value of ( nnpfc_pic_height_num_minus 1 + 1 ) ÷ ( nnpfc_pic_height_denom_minus 1 + 1 ) shall be in the range of 1 ÷ 16 to 16, inclusive. When nnpfc_pic_height_num_minus1 and nnpfc_pic_height_denom_minus1 are not present, the values of nnpfc_pic_height_num_minus1 and nnpfc_pic_height_denom_minus1 are both inferred to be equal to 0.

According to this variant embodiment, the equations for deriving the output picture (i.e., the large output picture) dimensions may be modified as follows (changes highlighted in italic, underline), when the NNPFC SEI purpose is temporal extrapolation (for instance, when parameter TemporalExtrapolationFlag equal to 1):

$$\text{nnpfcOutputPicWidth} = \underline{\textit{subpicPerRow *}}\ \text{Ceil( CroppedWidth *} \qquad (77)$$

$$(\text{nnpfc\_pic\_width\_num\_minus1} + 1) \div (\text{nnpfc\_pic\_width\_denom\_minus1} + 1))$$

$$\text{nnpfcOutputPicHeight} = \underline{\textit{subpicPerCol*}}\ \text{Ceil( CroppedHeight *} \qquad (78)$$

$$(\text{nnpfc\_pic\_height\_num\_minus1} + 1) \div (\text{nnpfc\_pic\_height\_denom\_minus1} + 1))$$

Thus, the subpictures corresponding to the multiple output versions in the large output picture may have dimensions subpicWidth and subpicHeight defined as follows:

$$\underline{\textit{subPicWidth} = \textit{Ceil( CroppedWidth *}}$$

$$\underline{\textit{( nnpfc\_pic\_width\_num\_minus1 + 1 ) ÷ ( nnpfc\_pic\_width\_denom\_minus1 + 1 ))}}$$

$$subPicHeight = Ceil(\ CroppedHeight\ *$$

$$(\ nnpfc\_pic\_height\_num\_minus1\ +\ 1\ ) \div (\ nnpfc\_pic\_height\_denom\_minus1\ +\ 1\ )\ )$$

According to yet another variant embodiment, the equations for deriving the output picture (i.e., the large output picture) dimensions may be modified as follows:

$$nnpfcOutputPicWidth = Ceil(\ CroppedWidth\ *\ \underline{subpicPerRow}\ * \qquad (77)$$

$$(\ nnpfc\_pic\_width\_num\_minus1\ +\ 1\ ) \div (\ nnpfc\_pic\_width\_denom\_minus1\ +\ 1\ )\ )$$

$$nnpfcOutputPicHeight = Ceil(\ CroppedHeight\ *\ \underline{subpicPerCol}* \qquad (78)$$

$$(\ nnpfc\_pic\_height\_num\_minus1\ +\ 1\ ) \div (\ nnpfc\_pic\_height\_denom\_minus1\ +\ 1\ )\ )$$

According to yet another preferred variant embodiment, the equations for deriving the output picture (i.e., the large output picture) are not modified but the following equations are added:

*When TemporalExtrapolation is equal to 1, nnpfcOutputPicWidth is updated as follows:*

$$\underline{nnpfcOutputPicWidth\ *= subpicPerRow}$$

*When TemporalExtrapolation is equal to 1, nnpfcOutputPicHeight is updated as follows:*

$$\underline{nnpfcOutputPicHeight\ *= subpicPerCol}$$

Alternatively, the modified formulae may apply whatever the purpose of the NNPFC SEI message. SubpicPerRow and SubpicPerCol are set by default equal to 1, or equivalently the syntax elements nnpfc_extrapolated_subpics_per_row_minus1 and nnpfc_extrapolated_subpics_per_column_minus1 are set by default equal to 0. When TemporalExtrapolationFlag is equal to 1, nnpfc_extrapolated_subpics_per_row_minus1 and nnpfc_extrapolated_subpics_per_column_minusl are signaled and decoded. When TemporalExtrapolationFlag is equal to 0, nnpfc_extrapolated_subpics_per_row_minus1 and nnpfc_extrapolated_subpics_per_column_minus1 are not present, and assigned to their default value, which is 0.

According to another variant embodiment, when other purposes than temporal extrapolation allow to generate more than one instance per time instant with the NNPF, the above formulae may apply for those purposes, with values for SubpicPerRow and SubpicPerCol defined by equations (77) and (78) above. In variant embodiment, nnpfc_nb_versions_per_extrapolated_picture_per_row_minus1 and nnpfc_extrapolated_subpics_per_column_minusl may be signaled and decoded.

In addition, the following constraints regarding the subpicture size and the output picture size defined in the current VSEI specification:
The variables outPatchWidth, outPatchHeight, horCScaling, verCScaling, outPatchCWidth, and outPatchCHeight are derived as follows:

$$outPatchWidth = (\ nnpfcOutputPicWidth\ *\ inpPatchWidth\ )\ /\ CroppedWidth \qquad (88)$$

$$outPatchHeight = (\ nnpfcOutputPicHeight\ *\ inpPatchHeight\ )\ /\ CroppedHeight \qquad (89)$$

with the constraints:
It is a requirement of bitstream conformance that outPatchWidth * CroppedWidth shall be equal to nnpfcOutputPicWidth * inpPatchWidth and outPatchHeight * CroppedHeight shall be equal to nnpfcOutputPicHeight * inpPatchHeight.
may be modified as follows (changes are highlighted in underlined and italic):
The variables outPatchWidth, outPatchHeight, horCScaling, verCScaling, outPatchCWidth, and outPatchCHeight are derived as follows:

$$\text{outPatchWidth} = ( \underline{(} \text{ nnpfcOutputPicWidth } \underline{/ \mathit{subpicPerRow} )} * \text{inpPatchWidth} ) \quad (88)$$
$$/ \text{CroppedWidth}$$

$$\text{outPatchHeight} = ( \underline{(} \text{ nnpfcOutputPicHeight } \underline{/ \mathit{subpicPerCol} )} * \text{inpPatchHeight} ) \quad (89)$$
$$/ \text{CroppedHeight}$$

with the modified constraints:

It is a requirement of bitstream conformance that outPatchWidth * CroppedWidth shall be equal to $\underline{(}$ nnpfcOutputPicWidth $\underline{/\mathit{subpicPerRow}}$ ) * inpPatchWidth and outPatchHeight * CroppedHeight shall be equal to $\underline{(}$ nnpfcOutputPicHeight $\underline{/\mathit{subpicPerCol})}$ * inpPatchHeight.

In the variant embodiment, where the output subpictures are of different sizes, for example as in FIG. 7b, the above formulae may be modified to directly take into account the individual sizes of each subpicture of index I as follows:

$$\text{nnpfcOutputPicWidth} = \sum_{i=0}^{\text{nnpfc\_extrapolated\_subpics\_minus1}-1} \text{Ceil}( \text{CroppedWidth} *$$
$$( \text{nnpfc\_pic\_width\_num\_minus1}[ I ] + 1 ) \div ( \text{nnpfc\_pic\_width\_denom\_minus1}[ I ] + 1 ) )$$

$$\text{nnpfcOutputPicHeight} = \sum_{i=0}^{\text{nnpfc\_extrapolated\_subpics\_minus1}-1} \text{Ceil}( \text{CroppedHeight} *$$
$$( \text{nnpfc\_pic\_height\_num\_minus1}[ i ] + 1 ) \div ( \text{nnpfc\_pic\_height\_denom\_minus1}[ i ] + 1 ) )$$

$$\text{outPatchWidth}[ i ] = ( \text{nnpfc\_width\_of\_subpicture}[ i ] * \text{inpPatchWidth} ) / \text{CroppedWidth} \quad (88)$$

$$\text{outPatchHeight}[ i ] = ( \text{nnpfc\_height\_of\_subpicture}[ i ] * \text{inpPatchHeight} ) / \text{CroppedHeight} \quad (89)$$

The above equations may be adapted to other varying examples of subpicture layouts, such as the one proposed in FIG. 7c.

**Feature(s) associated with the third embodiment are provided herein.**

The third embodiment comprises associating descriptive information to each version of the temporally extrapolated picture. For instance, when multiple versions of the temporally extrapolated picture are packed in a large frame, informative syntax elements may be signaled in the NNPFC SEI message for each temporally output version.

According to a particular feature, this information has the shape of a text prompt.

An example of syntax is provided in the table below where the additional syntax is highlighted by italic and underlined:

| nn_post_filter_characteristics( payloadSize ) { | Descriptor |
|---|---|
| **nnpfc_purpose** | u(16) |
| **nnpfc_id** | ue(v) |
| ... | u(1) |
| **nnpfc_property_present flag** | u(1) |
| if( nnpfc_property_present_flag ) { | |
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) *{* | |

(continued)

| | |
|---|---|
| **nnpfc_extrapolated_pics_minus1** | ue(v) |
| *nnpfc_extrapolated_subpics_minus1* | *u(4)* |
| *nnpfc_extrapolated_subpics_per_row_minus1* | *u(4)* |
| *nnpfc_text_prompt_present_flag* | u(1) |
| *if (nnpfc_text_prompt_present_flag) {* | |
| *for (i=0; i<= nnpfc_extrapolated_subpics_minus1; i++)* | |
| *while( !byte_aligned( ) )* | |
| *nnpfc_alignment_zero_bit_c* | *u(1)* |
| *nnpfc_text_prompt[ i ]* | *st(v)* |
| *}* | |
| ... | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

Accordingly, the new syntax semantics may specify:

**nnpfc_text_prompt**[ i ] specifies the string text prompt used for generating the ith temporally extrapolated picture. When nnpfc_text_prompt_present_flag is equal to 1, nnpfc_text_prompt shall not be a null string.

One example of text prompt arises in an interactive immersive viewing application using as display a head-mounted display. Temporal extrapolation may be used to anticipate the motion of the head of the end-user, in order to reduce the rendering latency, for example in case of delay due to the transmission network. In this example, possible text prompts may be "head does not move", "head turns to the right", "head turns to the left", "head turns to the top", "head turns to the bottom".

For example, 5 temporally extrapolated picture versions may be generated, with:

nnpfc_text_prompt[ 0 ] = "head does not move"
nnpfc_text_prompt[ 1 ] = "head turns to the right"
nnpfc_text_prompt[ 2 ] = "head turns to the left"
nnpfc_text_prompt[ 3 ] = "head turns to the top"
nnpfc_text_prompt[ 4 ] = "head turns to the bottom"

In another embodiment, the definition of text prompts per generated output picture version for one single time instant is extended to any purpose (other than temporal extrapolation) that may generate more than one output per time instant. At the decoder side, any external means may use these text prompts to select one generated output. For example, in the above use case, if the actual motion of the user's head is 'turning to the right', the external means, that is the head mounted display, would select among the different outputs the output with text prompt corresponding to 'head turns to the right'.

Note that text prompt may be also signaled when one single version of the output picture is generated. In this case, it may give information on the generated output picture.

**Feature(s) associated with the fourth embodiment are provided herein.**

The fourth embodiment comprises storing an output picture version from the output tensor of the NNPF. In other words, one one the subpicture is extracted from the large output picture to be output for instance for further processing or display.

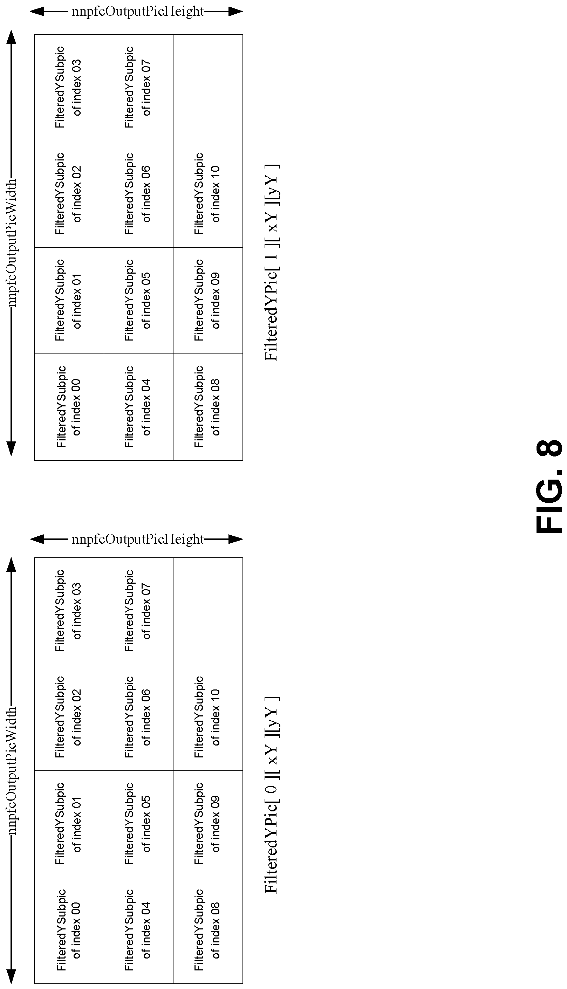

FIG. 8. illustrate another example of a packing of NN post-filtered pictures into a 2D array of subpictures stored as an output picture according to an embodiment. In Fig. 8, the structure of output picture, for instance FilteredYPic for the luma component, and of the different versions (subpictures) generated by the NNPF, for instance FilteredYSubpic for the luma component, are shown. The current VSEI specification describes the way the output pictures (FilteredYPic for luma, FilteredCbPic and FilteredCrPic for chroma) are extracted from the output tensor. This corresponds to the following text: The process StoreOutputTensors( ), for deriving sample values in the sample arrays FilteredYPic, FilteredCbPic, and FilteredCrPic, for the NNPF-generated pictures, from the output tensor outputTensor for a given vertical sample coordinate cTop and a horizontal sample coordinate cLeft specifying the top-left sample location for the patch of samples included in the input tensor, is specified as follows:

```
for( i = 0; i < numPicsInOutputTensor; i++ ) {

    if( nnpfc_out_order_idc == 0 )

        for( yP = 0; yP < outPatchHeight; yP++)

            for( xP = 0; xP < outPatchWidth; xP++ ) {

                yY = cTop * outPatchHeight / inpPatchHeight + yP

                xY = cLeft * outPatchWidth / inpPatchWidth + xP

                if ( yY < nnpfcOutputPicHeight  &&  xY < nnpfcOutputPicWidth )

                    if( !nnpfc_component_last_flag )

                        FilteredYPic[ i ][ xY ][yY ] = outputTensor[ 0 ][ i ][ 0 ][ yP ][ xP ]

                    else

                        FilteredYPic[ i ][ xY ][ yY ] = outputTensor[ 0 ][ i ][ yP ][ xP ][ 0 ]        }

    else if( nnpfc_out_order_idc == 1 )

        for( yP = 0; yP < outPatchCHeight; yP++)

            for( xP = 0; xP < outPatchCWidth; xP++ ) {

                xSrc = cLeft * horCScaling + xP

                ySrc = cTop * verCScaling + yP

                if ( ySrc < nnpfcOutputPicHeight / outSubHeightC  &&

                    xSrc < nnpfcOutputPicWidth / outSubWidthC )

                    if( !nnpfc_component_last_flag ) {

                        FilteredCbPic[ i ][ xSrc ][ ySrc ] = outputTensor[ 0 ][ i ][ 0 ][ yP ][ xP ]

                        FilteredCrPic[ i ][ xSrc ][ ySrc ] = outputTensor[ 0 ][ i ][ 1 ][ yP ][ xP ]

                    } else {

                        FilteredCbPic[ i ][ xSrc ][ ySrc ] = outputTensor[ 0 ][ i ][ yP ][ xP ][ 0 ]
```

```
                    FilteredCrPic[ i ][ xSrc ][ ySrc ] = outputTensor[ 0 ][ i ][ yP ][ xP ][ 1 ]

            }

        }
else if( nnpfc_out_order_idc  = =  2 )
    for( yP = 0; yP < outPatchHeight; yP++)
        for( xP = 0; xP < outPatchWidth; xP++ ) {
            yY = cTop * outPatchHeight / inpPatchHeight + yP
            xY = cLeft * outPatchWidth / inpPatchWidth + xP
            yC = yY / outSubHeightC
            xC = xY / outSubWidthC
            yPc = ( yP / outSubHeightC ) * outSubHeightC
            xPc = ( xP / outSubWidthC ) * outSubWidthC
            if ( yY < nnpfcOutputPicHeight  &&  xY < nnpfcOutputPicWidth )
                if( !nnpfc_component_last_flag ) {
                    FilteredYPic[ i ][ xY ][ yY ] = outputTensor[ 0 ][ i ][ 0 ][ yP ][ xP ]
                    FilteredCbPic[ i ][ xC ][ yC ] = outputTensor[ 0 ][ i ][ 1 ][ yPc ][ xPc ]
                    FilteredCrPic[ i ][ xC ][ yC ] = outputTensor[ 0 ][ i ][ 2 ][ yPc ][ xPc ]
                } else {
                    FilteredYPic[ i ][ xY ][ yY ] = outputTensor[ 0 ][ i ][ yP ][ xP ][ 0 ]
                    FilteredCbPic[ i ][ xC ][ yC ] = outputTensor[ 0 ][ i ][ yPc ][ xPc ][ 1 ]
                    FilteredCrPic[ i ][ xC ][ yC ] = outputTensor[ 0 ][ i ][ yPc ][ xPc ][ 2 ]
                }
        }
else if( nnpfc_out_order_idc  = =  3 )
    for( yP = 0; yP < outPatchHeight; yP++ )
        for( xP = 0; xP < outPatchWidth; xP++ ) {
            ySrc = cTop / 2 * outPatchHeight / inpPatchHeight + yP
            xSrc = cLeft / 2 * outPatchWidth / inpPatchWidth + xP
            if ( ySrc < nnpfcOutputPicHeight / 2  &&
                    xSrc < nnpfcOutputPicWidth / 2 )
                if( !nnpfc_component_last_flag ) {
                    FilteredYPic[ i ][ xSrc * 2 ][ ySrc * 2 ] = outputTensor[ 0 ][ i ][ 0 ][ yP ][ xP ]
                    FilteredYPic[ i ][ xSrc * 2 + 1 ][ ySrc * 2 ] = outputTensor[ 0 ][ i ][ 1 ][ yP ][ xP ]
                    FilteredYPic[ i ][ xSrc * 2 ][ ySrc * 2 + 1 ] = outputTensor[ 0 ][ i ][ 2 ][ yP ][ xP ]
```

FilteredYPic[ i ][ xSrc * 2 + 1][ ySrc * 2 + 1 ] = outputTensor[ 0 ][ i ][ 3 ][ yP ][ xP ]

FilteredCbPic[ i ][ xSrc ][ ySrc ] = outputTensor[ 0 ][ i ][ 4 ][ yP ][ xP ]

FilteredCrPic[ i ][ xSrc ][ ySrc ] = outputTensor[ 0 ][ i ][ 5 ][ yP ][ xP ]

} else {

FilteredYPic[ i ][ xSrc * 2 ][ ySrc * 2 ] = outputTensor[ 0 ][ i ][ yP ][ xP ][ 0 ]

FilteredYPic[ i ][ xSrc * 2 + 1 ][ ySrc * 2 ] = outputTensor[ 0 ][ i ][ yP ][ xP ][ 1 ]

FilteredYPic[ i ][ xSrc * 2 ][ ySrc * 2 + 1 ] = outputTensor[ 0 ][ i ][ yP ][ xP ][ 2 ]

FilteredYPic[ i ][ xSrc * 2 + 1][ ySrc * 2 + 1 ] = outputTensor[ 0 ][ i ][ yP ][ xP ][ 3 ]

FilteredCbPic[ i ][ xSrc ][ ySrc ] = outputTensor[ 0 ][ i ][ yP ][ xP ][ 4 ]

FilteredCrPic[ i ][ xSrc ][ ySrc ] = outputTensor[ 0 ][ i ][ yP ][ xP ][ 5 ]

}

}

}

The output picture FilteredYPic[ i ] [ xY ][yY ] is of width nnpfcOutputPicWidth and height nnpfcOutputPicHeight. The output pictures FilteredCbPic[ i ][ xY ][yY ] and FilteredCrPic[ i ][ xY ][yY ] are of width nnpfcOutputPicWidth / outSubWidthC and height nnpfcOutputPicHeight / outSubHeightC, where outSubWidthC and outSubHeightC are the horizontal and vertical size ratios between luma and chroma output pictures (for example, when the output is in 4:4:4 format, outSubWidthC and outSubHeightC are equal to 1; when the output is in 4:2:0 format, outSubWidthC and outSubHeightC are equal to 2). Index i corresponds to the time index of the picture in the output tensor, where each picture corresponds to a different output time instance. xY and yY are the sample coordinates in the picture.

As shown on FIG. 8, according to the present principles, FilteredYPic[ i ][ xY ][yY ] contains the multiple versions of the output luma picture of index i packed in a large frame, where two packed luma pictures FilteredYPic[ 0 ][ xY ][yY ] and FilteredYPic[ 1 ][ xY ][yY ] are produced for 2 time instant. This is also true for the chroma components, by replacing "Y" in "FilteredYPic" by "Cb" and "Cr".

Let subpicIdx be the index of the output picture version selected for instance by external means. Let subpicWidth and subpicHeight be the horizontal and vertical sizes of the subpictures. The relation between subpicIdx and the spatial position of the top-left sample of the corresponding output picture version, noted (Xsubpic, Ysubpic), in the output tensor is the following:

$$Xsubpic = subpicWidth * (subpicIdx \% subpicPerRow)$$

$$Ysubpic = subpicHeight * (subpicIdx / subpicPerRow)$$

where "/" is the integer division and "%" is the modulo operator.

Inversely, a sample at location (x,y) in the subpicture has position (xX, yY) in the large picture defined as follows:

$$idxX = subpicIdx / subpicPerRow$$

$$idxY = subpicIdx \% subpicPerRow$$

$$yY = idxY * subpicHeight + y$$

$$xY = idxX * subpicWidth + x$$

This relation should be described in the VSEI specification text above to explain how accessing a subpicture sample from the large output picture as follows (added text is highlighted in italic underline):

*When TemporalExtrapolationFlag is true, the process AccessOutputVersion( ), for deriving sample values in the sample arrays FilteredYSubpic, FilteredCbSubpic, and FilteredCrSubpic, for a subpicture of index subpicIdx in the range 0..nnpfc_extrapolated_subpics_minus1, from the sample arrays FilteredYPic, FilteredCbPic, and FilteredCrPic, is specified as follows:*

- *idxX is set equal to subpicIdx / subpicPerRow*

- *idxY is set equal to subpicIdx % subpicPerRow*

*for( i = 0; i < numPicsInOutputTensor; i++ ) {*

*if( nnpfc_out_order_idc = = 0 || nnpfc_out_order_idc = = 2 || nnpfc_out_order_idc = = 3 )*

*for( y = 0; y < subpicHeight; y++)*

*for( x = 0; x < subpicWidth; x++ ) {*

*yY = idxY * subpicHeight + y*

*xY = idxX * subpicWidth + x*

*FilteredYSubpic[ i ][ x ][y ] = FilteredYPic[ i ][ xY ][yY ]*

*}*

*else if( nnpfc_out_order_idc = = 1 || nnpfc_out_order_idc = = 2 || nnpfc_out_order_idc = = 3 )*

*for( y = 0; y < subpicHeight / outSubHeightC; y++)*

*for( x = 0; x < subpicWidth / outSubHeightC; x++ ) {*

*yY = idxY * (subpicHeight / outSubHeightC)  + y*

*xY = idxX * (subpicWidth / outSubWidthC) + x*

*FilteredCbSubpic[ i ][ x ][y ] = FilteredCbPic[ i ][ xY ][yY ]*

*FilteredCrSubpic[ i ][ x ][y ] = FilteredCrPic[ i ][ xY ][yY ]*

*}*

*}*

*Note: the parameter subpicIdx is provided by external means not specified in this document.*

According to a variant of the fourth embodiment, FilteredYPic may be directly extracted from the output tensor. In this variant, the specification text may directly defined FilteredYPic, FilteredCbPic, FilteredCrPic as the luma and chroma components of the subpicture corresponding to subpicIdx in the ouputTensor. This corresponds to the changes highlighted in italic underline below.

The process StoreOutputTensors( ), for deriving the Output tensor OutputTensor for a given vertical sample coordinate cTop and a horizontal sample coordinate cLeft specifying the top-left sample location for the patch of samples included in the input tensor, is specified as follows:

- *xMin, xMax, yMin, yMax, xMinC, xMaxC yMinC, yMaxC are defined as follows:*

$$\underline{xMin = subpicIdx * subpicWidth}$$

$$\underline{xMax = subpicIdx * subpicWidth + subpicWidth - 1}$$

$$\underline{yMin = subpicIdx * subpicHeight}$$

$$\underline{yMax = subpicIdx * subpicHeight + subpicHeight - 1}$$

$$\underline{xMinC = xMin / outSubWidthC}$$

$$\underline{xMaxC = xMax / outSubWidthC}$$

$$\underline{yMinC = yMin / outSubHeightC}$$

$$\underline{yMaxC = yMax / outSubHeightC}$$

- *For a subpicture index subpicIdx, with subpicIdx in the range*

*0..nnpfc_extrapolated_subpics_minus1, the following applies:*

```
for( i = 0; i < numPicsInOutputTensor; i++ ) {
  if( nnpfc_out_order_idc == 0 )
    for( yP = 0; yP < outPatchHeight; yP++)
     for( xP = 0; xP < outPatchWidth; xP++ ) {
        yY = cTop * outPatchHeight / inpPatchHeight + yP
        xY = cLeft * outPatchWidth / inpPatchWidth + xP
        if ( yY < nnpfcOutputPicHeight  &&  xY < nnpfcOutputPicWidth &&
            xY >= xMin && xY <= xMax && yY >= yMin && yY <= yMax )
```

```
            if( !nnpfc_component_last_flag )
                FilteredYPic[ i ][ xY − xMin ][ yY − yMin ] = outputTensor[ 0 ][ i ][ 0 ][ yP ][
xP ]        else
                FilteredYPic[ i ][ xY − xMin ][ yY − yMin ] = outputTensor[ 0 ][ i ][ yP ][ xP ][
0 ]     }
    else if( nnpfc_out_order_idc = = 1 )
        for( yP = 0; yP < outPatchCHeight; yP++)
        for( xP = 0; xP < outPatchCWidth; xP++ ) {
            xSrc = cLeft * horCScaling + xP
            ySrc = cTop * verCScaling + yP
            if ( ySrc < nnpfcOutputPicHeight / outSubHeightC  &&
                xSrc < nnpfcOutputPicWidth / outSubWidthC &&
                xSrc >= xMinC && xSrc <= xMaxC && ySrc >= yMinC && ySrc <= yMaxC )
                if( !nnpfc_component_last_flag ) {
                    FilteredCbPic[ i ][ xSrc − xMinC ][ ySrc − yMinC ] = outputTensor[ 0 ][ i ][ 0 ][
yP ][ xP ]
                    FilteredCrPic[ i ][ xSrc − xMinC ][ ySrc − yMinC ] = outputTensor[ 0 ][ i ][ 1 ][
yP ][ xP ]
                } else {
                    FilteredCbPic[ i ][ xSrc− xMinC ][ ySrc − yMinC ] = outputTensor[ 0 ][ i ][ yP ][
xP ][ 0 ]
                    FilteredCrPic[ i ][ xSrc − xMinC ][ ySrc − yMinC ] = outputTensor[ 0 ][ i ][ yP ][
xP ][ 1 ]
                }
            }
    else if( nnpfc_out_order_idc = = 2 )
        for( yP = 0; yP < outPatchHeight; yP++)
        for( xP = 0; xP < outPatchWidth; xP++ ) {
            yY = cTop * outPatchHeight / inpPatchHeight + yP
            xY = cLeft * outPatchWidth / inpPatchWidth + xP
            yC = yY / outSubHeightC
            xC = xY / outSubWidthC
            yPc = ( yP / outSubHeightC ) * outSubHeightC
            xPc = ( xP / outSubWidthC ) * outSubWidthC
```

```
        if ( yY < nnpfcOutputPicHeight && xY < nnpfcOutputPicWidth &&
            xY >= xMin && xY <= xMax && yY >= yMin && yY <= yMax )
            if( !nnpfc_component_last_flag ) {
                FilteredYPic[ i ][ xY – xMin ][ yY – yMin ] = outputTensor[ 0 ][ i ][ 0 ][ yP ][
xP ]
                FilteredCbPic[ i ][ xC – xMinC ][ yC – yMinC ] = outputTensor[ 0 ][ i ][ 1 ][ yPc
][ xPc ]
                FilteredCrPic[ i ][ xC – xMinC ][ yC – yMinC ] = outputTensor[ 0 ][ i ][ 2 ][ yPc
][ xPc ]
            } else {
                FilteredYPic[ i ][ xY – xMin ][ yY – yMin ] = outputTensor[ 0 ][ i ][ yP ][ xP ][
0 ]
                FilteredCbPic[ i ][ xC – xMinC ][ yC – yMinC ] = outputTensor[ 0 ][ i ][ yPc ][
xPc ][ 1 ]
                FilteredCrPic[ i ][ xC – xMinC ][ yC – yMinC ] = outputTensor[ 0 ][ i ][ yPc ][
xPc ][ 2 ]
            }
        }
    else if( nnpfc_out_order_idc = = 3 )
        for( yP = 0; yP < outPatchHeight; yP++ )
        for( xP = 0; xP < outPatchWidth; xP++ ) {
            ySrc = cTop / 2 * outPatchHeight / inpPatchHeight + yP
            xSrc = cLeft / 2 * outPatchWidth / inpPatchWidth + xP
            if ( ySrc < nnpfcOutputPicHeight / 2 &&
                xSrc < nnpfcOutputPicWidth / 2 &&
                xSrc >= xMin/2 && xSrc <= xMax/2 && ySrc >= yMin/2 && ySrc <=
yMax/2 )
                if( !nnpfc_component_last_flag ) {
                    FilteredYPic[ i ][ xSrc * 2 – xMin ][ ySrc * 2 – yMin ] =
                        outputTensor[ 0 ][ i ][ 0 ][ yP ][ xP ]
                    FilteredYPic[ i ][ xSrc * 2 + 1 – xMin ][ ySrc * 2 – yMin ] =
                        outputTensor[ 0 ][ i ][ 1 ][ yP ][ xP ]
                    FilteredYPic[ i ][ xSrc * 2 – xMin ][ ySrc * 2 + 1 – yMin ] =
                        outputTensor[ 0 ][ i ][ 2 ][ yP ][ xP ]
```

FilteredYPic[ i ][ xSrc * 2 + 1 _– xMin_][ ySrc * 2 + 1 _– yMin_ ] =

outputTensor[ 0 ][ i ][ 3 ][ yP ][ xP ]

FilteredCbPic[ i ][ xSrc _– xMin/2_ ][ ySrc _– yMin/2_ ] =

outputTensor[ 0 ][ i ][ 4 ][ yP ][ xP ]

FilteredCrPic[ i ][ xSrc _– xMin/2_ ][ ySrc _– yMin/2_ ] =

outputTensor[ 0 ][ i ][ 5 ][ yP ][ xP ]

} else {

FilteredYPic[ i ][ xSrc * 2 ][ ySrc * 2 ] = outputTensor[ 0 ][ i ][ yP ][ xP ][ 0 ]

FilteredYPic[ i ][ xSrc * 2 + 1 ][ ySrc * 2 ] = outputTensor[ 0 ][ i ][ yP ][ xP ][ 1 ]

FilteredYPic[ i ][ xSrc * 2 ][ ySrc * 2 + 1 ] = outputTensor[ 0 ][ i ][ yP ][ xP ][ 2 ]

FilteredYPic[ i ][ xSrc * 2 + 1][ ySrc * 2 + 1 ] = outputTensor[ 0 ][ i ][ yP ][ xP ][ 3 ]

FilteredCbPic[ i ][ xSrc ][ ySrc ] = outputTensor[ 0 ][ i ][ yP ][ xP ][ 4 ]

FilteredCrPic[ i ][ xSrc ][ ySrc ] = outputTensor[ 0 ][ i ][ yP ][ xP ][ 5 ]

}

}

}

_Note: the parameter subpicIdx is provided by external means not specified in this document._

According to yet another variant, when each subpicture has its own width and height, the above formulae may be modified accordingly to take those sizes into account.

**Feature(s) associated with the fifth embodiment are provided herein.**

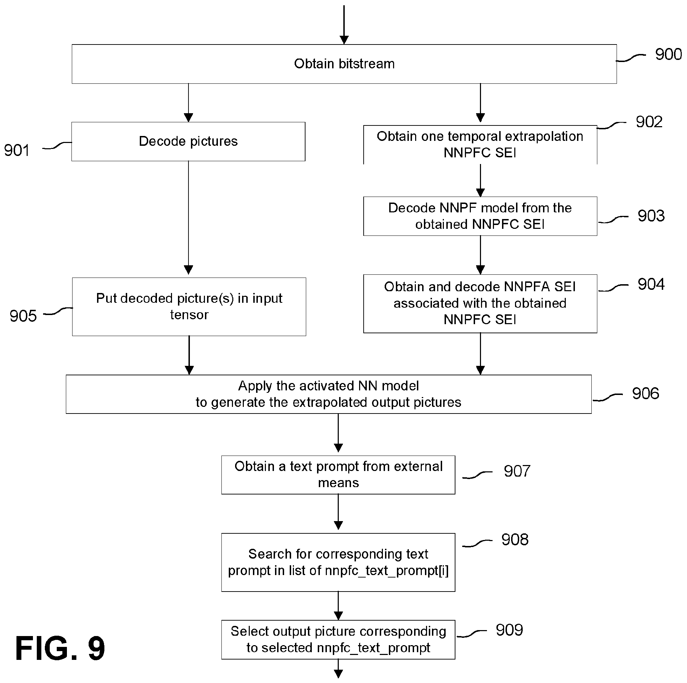

Figure 9 provides a flow chart of a possible decoding and post-filtering process. The bitstream is obtained in step 900. Step 901 performs the decoding of pictures to generate decoded pictures. The decoded pictures are put in the input tensor in step 905. According to different variant one or more decoded pictures are used by the NNPF and stored in the input tensor. Step 902 obtains one NNPFC SEI message with purpose for instance corresponding to temporal extrapolation. One NNPF model is decoded from the NNPFC SEI in step 903. A NNPFA SEI message associated to the NNPFC SEI message is obtained and decoded in step 904. Although this step is currently implemented in the known NNPF process, the skilled in the art will notice that this step is not essential to the present principles of multi-hypothesis NNPF and may be removed. In step 906, the temporal extrapolation is performed using the activated NNPF model, using as input the input tensor containing the one or more decoded pictures. It produces several output temporal extrapolated pictures per time instant associated each with a text prompt descriptive of the respective version as described in the third embodiment. In step 907, a text prompt may be obtained from some external means, for example a head mounted display. In step 908, a nnpfc_text_prompt[ i ] corresponding to the external text prompt is selected and its index i is used to select the expected output from the NNPF for each given time instant in step 909. In step 909, equations as defined for the fourth embodiment may be used to do the mapping between the selected output picture and its spatial location in the large packed NNPF output tensor.

According to a variant, the same process as in FIG. 9 may be applied in case the external means directly selects the output picture given some index value I knowing the correspondence between the index and the indication descriptive of the version.

**Feature(s) associated with the sixth embodiment are provided herein.**

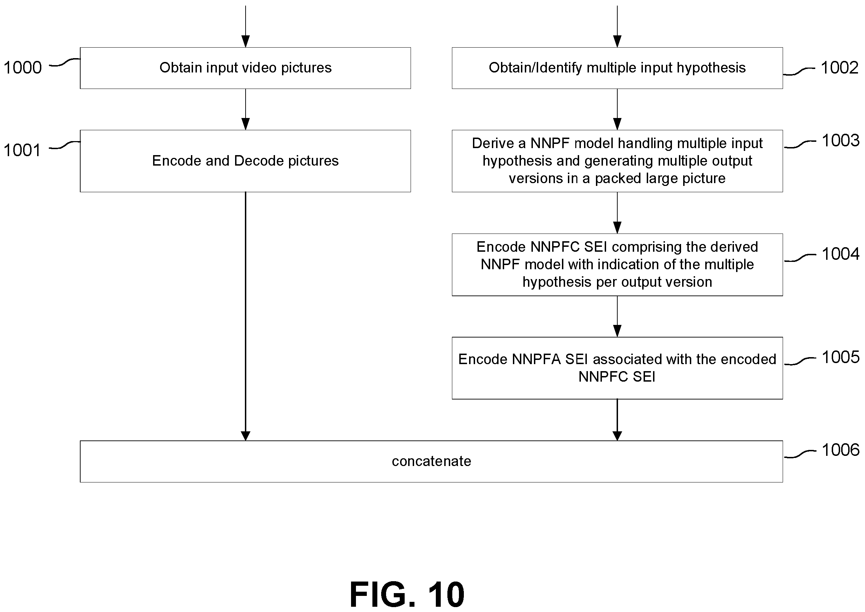

FIG. 10 provides a flow chart of an encoding and signaling process according to an embodiment of the present principles. The inputs are the input video, obtained in step 1000, and the list of hypotheses associated to various output versions to be produced by the NNPF (step 1002). The list of hypotheses may be expressed as a list of text prompts. Step 1003 derives the NNPF model able to handle multiple input hypothesis and to generate a large picture packing multiple output picture versions. Related NNPFC SEI message associated to the NNPF model is encoded, with insertion of information in these NNPFC SEI messages to allow generation of multiple versions of the pictures for the multiple hypotheses into a large packed picture (step 1004). The NNPFA SEI message signaled to activate the NNPFC SEI message is also encoded prior to the decoded picture from which the NNPF should apply (step 1005). Data are then concatenated to generate the output bitstream (step 1006).

**Feature(s) associated with an application of the present principles are provided herein**.

FIG. 11 provides an example of usage of multiple temporally extrapolated pictures for reducing latency in which an embodiment of the present principles may apply.
An example of interactive application where latency is key is cloud gaming. Cloud gaming allows for partly offloading the game rendering process to some game servers located in the cloud. The 3D graphics rendering, which requires costly and power consuming devices, is performed by game servers in the cloud. The rendered frames are encoded with a regular video encoder and the video stream is decoded on client side with a regular decoder. An additional lightweight module is in charge on managing the gamer interaction commands and frame synchronization. A key factor for user comfort in gaming applications is the motion-to-photon latency corresponding to the latency between a user action (motion) and the rendering of the results of this action on the display device (photon). Typically, a processing latency may be introduced at each of the following stage of a motion-to-photon pipeline in a cloud gaming application:

- The hardware latency of the input device, for example a joypad, called input lag, is typically -10ms.
- The transmission latency (from client to server and server to client), that, depending on the connection quality, can range from few ms to few 100ms.
- The game engine rendering stage depends on the Frame-per-Second which is typically 60. It means that rendering takes less than 17ms.
- The encoder is typically used in low-delay configuration. Real-time encoder usually encodes a frame in few ms.
- The decoder latency can be considered as a few ms.
- The latency of high-end monitor is usually ~20ms.
- Additional hardware latency might add few 10ms.

In total, the final motion-to-photon may reach a few 100ms. Typically, user discomfort starts when latency is above 200ms, which is the very maximum acceptable latency value, thay may often not be satisfied in real could gaming applications. However, for VR using headset visualization, an even lower latency is needed for a proper user comfort, i.e, down to less than 20ms. In order to reduce the latency, given a current state or rendered picture, an approximate rendering of the next rendered picture is processed, for instance by temporally extrapolating the future picture(s) to render, based on the latest decoded picture(s). At a given time instant t, the client produces in advance different extrapolated picture versions from the one or more latest decoded pictures dec(t-K)... dec(t). For example, N extrapolated picture versions pictl(t+dt)...pictN(t+dt) are generated for time instant t+dt from the available decoded pictures dec(t-K)... dec(t). At time t+dt, considering that the decoded picture dec(t+dt) is not yet available due to the system latency, the rendered picture is picked among the N extrapolated picture versions pictl(t+dt)...pictN(t+dt) generated at time t. The displayed version may be chosen among the N versions depending on the real game state, the actual user action, etc. In this example, extrapolated pictures are generated for one future time instant t+dt. However, the process may also generate extrapolated pictures for several future time instants {pict1(t+1)...pictN(t+1)} ... {pictl(t+M)...pictN(t+M)}, and the extrapolated picture finally rendered is selected based on the actual latency dt (in 1..M) among the set {pictl(t+dt)...pictN(t+dt)} and on the user action or game state.
An example of usage of multiple temporally extrapolated pictures for reducing latency is shown on FIG. 11., where the overall latency is dt. Some time after t and before t+dt, in a step 1102, the bits of picture at instant t are received and decoded. Then, in 1103, the client may anticipate latency issues by performing an extrapolation from the latest available decoded picture(s) to generate several possible extrapolated versions {pictl(t+dt)...pictN(t+dt)} for a future time instant (t+dt) (here for clarity, we consider only one future time instant (t+dt)). At time t+dt, although the decoded picture is not yet received or decoded 1105 in time (due to latency) and cannot be displayed at time t+dt, the client may select in step 1104 among the various extrapolated pictures {pictl(t+dt)...pictN(t+dt)} the version pictk(t+dt) corresponding to the real user action / game state. The client may send this version for rendering at time instant (t+dt). This process may iterate for the following decoded pictures. Advantageously, in this scenario, the latency is removed thanks to the fact that the extrapolated pictures are generated in advance to the rendering instant. This requires generating in advance several versions of a same extrapolated picture, the correct version being selected a little before the rendering time, based on the game state or user action (for instance, the head motion in case of a headset).

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data in order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

**EP 4 730 780 A1**

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.  A method comprising:

decoding (901) a picture of a video;
obtaining (902) a syntax structure NNPFC for neural-network post-filter;
decoding (903) a neural-network post-filter NNPF model from the obtained NNPFC;
obtaining (904) a syntax structure for neural-network post-filter activation NNPFA associated with the obtained NNPFC; and

generating (906) at least two filtered subpictures by applying the activated NNPF model to the decoded picture, the activated NNPF model handling multiple input hypothesis, wherein at least two filtered subpictures are packed in a large output picture.

2. An apparatus comprising one or more processors, wherein the one or more processors are configured for:

   decoding (901) a picture of a video;
   obtaining (902) a syntax structure NNPFC for neural-network post-filter;
   decoding (903) a neural-network post-filter NNPF model from the obtained NNPFC;
   obtaining (904) a syntax structure for neural-network post-filter activation NNPFA associated with the obtained NNPFC; and
   generating (906) at least two filtered subpictures by applying the activated NNPF model to the decoded picture, the activated NNPF model handling multiple input hypothesis, wherein at least two filtered subpictures are packed in a large output picture.

3. The method of claim 1 or the apparatus of claim 2 wherein the syntax structure NNPFC comprises an indication of a number of filtered subpictures packed into a large output picture.

4. The method of any of claims 1 or 3 or the apparatus of any of claims 2 or 3 wherein the syntax structure NNPFC comprises an indication of a number of filtered subpictures packed in a row of a large output picture.

5. The method of any of claims 1, 3-4 or the apparatus of any of claims 2, 3-4 wherein the syntax structure NNPFC comprises an indication of whether variable filtered subpicture sizes are allowed or not.

6. The method of claim 4 or the apparatus of claim 4 wherein the syntax structure NNPFC comprises an indication of a size of respective filtered subpictures responsive to the indication that variable filtered subpicture sizes are allowed.

7. The method of any of claims 1, 3-6 or the apparatus of any of claims 2, 3-6, wherein the syntax structure NNPFC comprises an indication of whether text prompt information descriptive of a respective filtered subpicture of the activated NNPF model is present in the syntax structure.

8. The method of claim 7 or the apparatus of claim 7 wherein the syntax structure NNPFC comprises an indication of text prompt information descriptive of a respective filtered subpicture responsive to the indication that such text prompt information is present in the syntax structure.

9. The method of claim 8 or the apparatus of claim 8, wherein the syntax structure NNPFC comprises

   obtaining (907) a text prompt from a user input captured by external means;
   responsive (908,909) to the obtained text prompt corresponds to the indication of text prompt information descriptive of a current filtered subpicture, selecting the current filtered subpicture as output picture.

10. A method comprising: (any order)

    encoding and decoding (1000) a picture of a video;
    obtaining (1002) multiple input hypothesis for a neural-network post-filter NNPF;
    deriving (1003) a neural-network post-filter NNPF model handling the multiple input hypothesis, the NNPF model generating at least two filtered subpictures packed in a large output picture;
    encoding (1004) a syntax structure NNPFC for neural-network post-filter, the syntax structure NNPFC comprising an indication of the NNPF model generating at least two filtered subpictures packed in a large output picture;
    encoding (1005) a syntax structure for neural-network post-filter activation NNPFA associated with the NNPFC; and
    generating (1006) a bitstream comprising the encoded picture, the encoded NNPFC, the encoded NNPFA.

11. An apparatus comprising one or more processors, wherein the one or more processors are configured for:

    encoding (1000) a picture of a video;
    obtaining (1002) multiple input hypothesis;
    deriving (1003) a NNPF model handling multiple input hypothesis, the NNPF model generating at least two filtered subpictures packed in a large output picture;
encoding (1004) a syntax structure NNPFC for neural-network post-filter, the syntax structure NNPFC comprising an indication of the multi hypothesis NNPF model generating at least two filtered subpictures packed in a large output picture;
encoding (1005) a syntax structure for neural-network post-filter activation NNPFA associated with the syntax structure NNPFC; and
generating (1006) a bitstream comprising the encoded picture, the encoded NNPFC, the encoded NNPFA.

12. The method of claim 10 or the apparatus of claim 11 wherein the syntax structure NNPFC comprises an indication of a number of filtered subpictures packed into a large output picture.

13. The method of any of claims 10, 12 or the apparatus of any of claims 11, 12 wherein the syntax structure NNPFC comprises an indication of a number of filtered subpictures packed in a row of a large output picture.

14. The method of any of claims 10, 12-13 or the apparatus of any of claims 11, 12-13, wherein the syntax structure NNPFC comprises an indication of whether text prompt information descriptive of a respective filtered subpicture of the activated NNPF model is present in the syntax structure.

15. The method of claim 14 or the apparatus of claim 14 wherein the syntax structure NNPFC comprises an indication of text prompt information descriptive of a respective filtered subpicture responsive to the indication that such text prompt information is present in the syntax structure.

**FIG. 1**

EP 4 730 780 A1

**FIG. 2**

**FIG. 3**

| output | output | output |     | output | output | output |     | output | output | output |     | output | output | output |
|--------|--------|--------|-----|--------|--------|--------|-----|--------|--------|--------|-----|--------|--------|--------|

| Application of NNPF0 | Application of NNPF0 updated by NNPF1 | Application of NNPF0 updated by NNPF2 | Application of NNPF0 |
|---|---|---|---|

| NNP FC0 | NNP FA0 | Dec pict | Dec pict | Dec pict | NNP FC1 | NNP FA1 | Dec pict | Dec pict | Dec pict | NNP FC2 | Dec pict | Dec pict | Dec pict | NNP FC3 | NNP FA2 | Dec pict | Dec pict | Dec pict |
|---|---|---|---|---|---|---|---|---|---|---|---|---|---|---|---|---|---|---|

**NNPFA0**
Id = k
Base_flag = 1

**NNPFA1**
Id = k
Base_flag = 0

**NNPFA2**
Id = k
Base_flag = 1

**NNPFC0**
Purpose = n
Id = k
Base_flag = 1
NN model0

**NNPFC1**
Purpose = n
Id = k
Base_flag = 0
NN model1

**NNPFC2**
Purpose = n
Id = k
Base_flag = 0
NN model2

**NNPFC3**
Purpose = n
Id = k
Base_flag = 1
NN model0

# FIG. 4

(1+nnpfc_extrapolated_pics_minus1)
output pictures

| outp ut | outp ut | _ _ _ | outp ut |

Application of NNPF0

(1+nnpfc_extrapolated_pics_minus1)
output pictures

| outp ut | outp ut | _ _ _ | outp ut |

Application of NNPF0
updated by NNPF1

| NNPF C0 | Dec pict | Dec pict | NNPF A0 | Dec pict | NNPF A1 | Dec pict | Dec pict | NNPF C1 | Dec pict | Dec pict | NNPF A2 | Dec pict | NNPF A3 |

NNPFA0
Id = k
Base_flag = 1

NNPFA1
Id = k
CANCEL

NNPFA2
Id = k
Base_flag = 0

NNPFA3
Id = k
CANCEL

NNPFC0
Purpose = n
Id = k
Base_flag = 1
NN model0

NNPFC1
Purpose = n
Id = k
Base_flag = 0
NN model1

FIG. 5

600

| 601 | 602 | 603 | 604 |
|---|---|---|---|
| Extrapolated picture 01 | Extrapolated picture 02 | Extrapolated picture 03 | Extrapolated picture 04 |

# FIG. 6a

600

| |
|---|
| 601 — Extrapolated picture 01 |
| 602 — Extrapolated picture 02 |
| 603 — Extrapolated picture 03 |
| 604 — Extrapolated picture 04 |

# FIG. 6b

700

701

| Extrapolated picture 00 | Extrapolated picture 01 | Extrapolated picture 02 | Extrapolated picture 03 |
|---|---|---|---|
| Extrapolated picture 04 | Extrapolated picture 05 | Extrapolated picture 06 | Extrapolated picture 07 |
| Extrapolated picture 08 | Extrapolated picture 09 | Extrapolated picture 10 | |

702

**FIG. 7a**

700

704

705

| Extrapolated picture 00 | Extrapolated picture 01 | Extrapolated picture 02 | Extrapolated picture 03 | Extrapolated picture 04 | Extrapolated picture 05 | Extrapolated picture 06 | Extrapolated picture 07 |
|---|---|---|---|---|---|---|---|

**FIG. 7b**

| Extrapolated picture 00 | Extrapolated picture 01 | Extrapolated picture 02 | Extrapolated picture 03 | |
|---|---|---|---|---|
| Extrapolated picture 04 | Extrapolated picture 05 | Extrapolated picture 06 | Extrapolated picture 07 | |

## FIG. 7c

| Extrapolated picture 00 | Extrapolated picture 01 | Extrapolated picture 02 | |
|---|---|---|---|
| Extrapolated picture 04 | Extrapolated picture 05 | Extrapolated picture 06 | |
| | | Extrapolated picture 03 | Extrapolated picture 07 |

## FIG. 7d

EP 4 730 780 A1

←————————————nnpfcOutputPicWidth————————————→

| FilteredYSubpic of index 00 | FilteredYSubpic of index 01 | FilteredYSubpic of index 02 | FilteredYSubpic of index 03 |
|---|---|---|---|
| FilteredYSubpic of index 04 | FilteredYSubpic of index 05 | FilteredYSubpic of index 06 | FilteredYSubpic of index 07 |
| FilteredYSubpic of index 08 | FilteredYSubpic of index 09 | FilteredYSubpic of index 10 | |

nnpfcOutputPicHeight

FilteredYPic[ 0 ][ xY ][yY ]

←————————————nnpfcOutputPicWidth————————————→

| FilteredYSubpic of index 00 | FilteredYSubpic of index 01 | FilteredYSubpic of index 02 | FilteredYSubpic of index 03 |
|---|---|---|---|
| FilteredYSubpic of index 04 | FilteredYSubpic of index 05 | FilteredYSubpic of index 06 | FilteredYSubpic of index 07 |
| FilteredYSubpic of index 08 | FilteredYSubpic of index 09 | FilteredYSubpic of index 10 | |

nnpfcOutputPicHeight

FilteredYPic[ 1 ][ xY ][yY ]

# FIG. 8

```
                              │
                              ▼
┌──────────────────────────────────────────────────────────┐
│                      Obtain bitstream                      │──── 900
└──────────────────────────────────────────────────────────┘
            │                                  │
            ▼                                  ▼
┌───────────────────────┐        ┌───────────────────────────┐
│    Decode pictures     │        │  Obtain one temporal       │──── 902
│                        │        │  extrapolation NNPFC SEI   │
└───────────────────────┘        └───────────────────────────┘
  901                                          │
                                               ▼
                                  ┌───────────────────────────┐
                                  │   Decode NNPF model from   │──── 903
                                  │   the obtained NNPFC SEI   │
                                  └───────────────────────────┘
            │                                  │
            ▼                                  ▼
┌───────────────────────┐        ┌───────────────────────────┐
│  Put decoded picture(s)│        │  Obtain and decode NNPFA   │──── 904
│     in input tensor    │        │  SEI associated with the   │
│                        │        │    obtained NNPFC SEI      │
└───────────────────────┘        └───────────────────────────┘
  905                                          │
            │                                  │
            ▼                                  ▼
┌──────────────────────────────────────────────────────────┐
│                Apply the activated NN model                │──── 906
│         to generate the extrapolated output pictures       │
└──────────────────────────────────────────────────────────┘
                              │
                              ▼
                ┌───────────────────────────┐
                │  Obtain a text prompt from │──── 907
                │       external means       │
                └───────────────────────────┘
                              │
                              ▼
                ┌───────────────────────────┐
                │   Search for corresponding │──── 908
                │   text prompt in list of   │
                │     nnpfc_text_prompt[i]   │
                └───────────────────────────┘
                              │
                              ▼
                ┌───────────────────────────┐
                │  Select output picture     │──── 909
                │  corresponding to selected │
                │      nnpfc_text_prompt     │
                └───────────────────────────┘
                              │
                              ▼
```

**FIG. 9**

EP 4 730 780 A1

```
                                                           ┌──────────────────────────────────┐
1000 ─┐  ┌──────────────────────────────────┐             │  Obtain/Identify multiple input    │ ┌─ 1002
       └─│      Obtain input video pictures   │            │            hypothesis              │─┘
         └──────────────────────────────────┘             └──────────────────────────────────┘
                            │                                             │
                            ▼                                             ▼
1001 ─┐  ┌──────────────────────────────────┐             ┌──────────────────────────────────┐ ┌─ 1003
       └─│                                    │            │ Derive a NNPF model handling       │─┘
         │      Encode and Decode pictures    │            │ multiple input hypothesis and      │
         │                                    │            │ generating multiple output         │
         └──────────────────────────────────┘             │ versions in a packed large picture │
                            │                              └──────────────────────────────────┘
                            │                                             │
                            │                                             ▼
                            │                              ┌──────────────────────────────────┐ ┌─ 1004
                            │                              │ Encode NNPFC SEI comprising the    │─┘
                            │                              │ derived NNPF model with indication │
                            │                              │ of the multiple hypothesis per     │
                            │                              │ output version                     │
                            │                              └──────────────────────────────────┘
                            │                                             │
                            │                                             ▼
                            │                              ┌──────────────────────────────────┐ ┌─ 1005
                            │                              │ Encode NNPFA SEI associated with   │─┘
                            │                              │ the encoded NNPFC SEI              │
                            │                              └──────────────────────────────────┘
                            │                                             │
                            ▼                                             ▼
         ┌─────────────────────────────────────────────────────────────────────────────────┐ ┌─ 1006
         │                                    concatenate                                     │─┘
         └─────────────────────────────────────────────────────────────────────────────────┘
```

# FIG. 10

**FIG. 11**

Europäisches Patentamt
European Patent Office
Office européen des brevets

# EUROPEAN SEARCH REPORT

**Application Number**

EP 24 30 6722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DESHPANDE (SHARP) S: "AHG9: On Neural Network Post Filter with Multiple Temporal Extrapolations", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0322 12 July 2024 (2024-07-12), XP030320743, Retrieved from the Internet: URL:https://jvet-experts.org/doc_end_user/documents/35_Sapporo/wg11/JVET-AI0322-v1.zip JVET-AI0322-v1.docx [retrieved on 2024-07-12] | 1-6, 10-13 | INV. H04N19/117 H04N19/172 H04N19/70 H04N19/85 |
| Y | * the whole document * | 7-9,14, 15 | |
| | ----- | | |
| X | FRANÇOIS (INTERDIGITAL) E ET AL: "AHG9: Questions regarding NNPFC SEI message with temporal extrapolation purpose", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0296 11 July 2024 (2024-07-11), XP030320713, Retrieved from the Internet: URL:https://jvet-experts.org/doc_end_user/documents/35_Sapporo/wg11/JVET-AI0296-v1.zip JVET-AI0296_NNPF_temporalExtrapol_v1.docx [retrieved on 2024-07-11] | 1-6, 10-13 | **TECHNICAL FIELDS SEARCHED (IPC)**  H04N |
| Y | * the whole document * | 7-9,14, 15 | |
| | ----- | | |
| | -/-- | | |

The present search report has been drawn up for all claims

| Place of search | Date of completion of the search | Examiner |
|---|---|---|
| Munich | 1 April 2025 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

| | Europäisches Patentamt European Patent Office Office européen des brevets | **EUROPEAN SEARCH REPORT** | **Application Number** EP 24 30 6722 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | DESHPANDE (SHARP) S: "AHG9: On Neural Network Post Filter for Spatial Extrapolation", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0061 5 July 2024 (2024-07-05), XP030320169, Retrieved from the Internet: URL:https://jvet-experts.org/doc_end_user/documents/35_Sapporo/wg11/JVET-AI0061-v1.zip JVET-AI0061-v1.docx [retrieved on 2024-07-05] * * ----- | 7-9,14, 15 | |
| X | J-R OHM: "Meeting Report of the 35th JVET Meeting", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI1000 16 August 2024 (2024-08-16), XP030320793, Retrieved from the Internet: URL:https://jvet-experts.org/doc_end_user/documents/35_Sapporo/wg11/JVET-AI1000-v1.zip JVET-AI1000-v1.docx [retrieved on 2024-08-16] * page 190 - page 194 * ----- | 1-15 | TECHNICAL FIELDS SEARCHED (IPC) |

The present search report has been drawn up for all claims

| Place of search | Date of completion of the search | Examiner |
| --- | --- | --- |
| Munich | 1 April 2025 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)